# EUROPÄISCHE PATENTSCHRIFT

(11) **EP 0 496 267 B1**
(45) Veröffentlichungstag und Bekanntmachung des Hinweises auf die Patenterteilung: **19.10.1994**
(21) Anmeldenummer: 92100588.0
(22) Anmeldetag: 15.01.1992
(51) Int. Cl.: B60R 21/26

(54) **Gasgenerator, insbesondere für Airbag**
Air-bag gas generator
Générateur de gaz pour un sac gonflable

(30) Priorität: 19.01.1991 DE 4101546
(43) Veröffentlichungstag der Anmeldung: 29.07.1992
(73) Patentinhaber: Dynamit Nobel Aktiengesellschaft, 53839 Troisdorf (DE)
(72) Erfinder: Kraft, Josef, Dipl.-Ing., W-8438 Berg (DE); Scheiderer, Gerrit, W-8510 Fürth (DE); Winkler, Hans, W-8510 Fürth (DE)

(56) Entgegenhaltungen:
- DE-A- 3 914 690
- DE-U- 9 013 130
- US-A- 4 796 912
- US-A- 4 938 501

## Beschreibung

Die Erfindung betrifft einen Gasgenerator, insbesondere für Airbag, mit einem Gehäuse, das an zwei gegenüberliegenden stirnseitigen Enden offen ist und in seiner Gehäusewand mindestens eine Gasaustrittsöffnung aufweist, zwei Deckelelementen zum Verschließen der stirnseitigen Enden des Gehäuses, einer im Gehäuse angeordneten, mindestens eine Auslaßöffnung aufweisenden Verbrennungskammer zur Aufnahme und Verbrennung von mittels einer Anzündeinheit zündbarem gasentwickelndem Material und mindestens einem in dem Gehäuse angeordneten, mehrere Drahtsiebmatten aufweisenden Filterelement zum Reinigen der Verbrennungsgasströmung.

Bei den bekannten Gasgeneratoren handelt es sich zumeist um Rundgeneratoren, deren Gehäuse aus mehreren Teilen zusammengesetzt ist, was teilweise relativ aufwerdige Verbindungstechniken und Verfahren zum Verbinder einzelnen Gehäuseteile erforderlich macht. Die bei Gasgeneratoren erforderlichen Filterelemente, mit denen die Verbrennungsgasströmung gereinigt wird, müssen aufgrund der geometrischen Gestaltung der Rundgeneratoren zu aufwendigen Gebilden (Rohr-, Napf-, Hutform) geformt werden. Vorteile bezüglich des Zusammenbaus der einzelnen Gehäuseteile bietet ein Rohrgasgenerator, wie er beispielsweise aus DE 39 14 690 C2 bekannt ist. Der bekannte Rohrgasgenerator weist ein zylindrisches Außenrohr auf, das das Gehäuse des Gasgenerators darstellt und dessen offene stirnseitige Enden von Deckelelementen verschlossen sind. In dem Außenrohr ist ein zylindrisches Innenrohr geringeren Durchmessers koaxial angeordnet; dieses Innenrohr begrenzt die Verbrennungskammer, in der ein mittels einer Anzündeinheit zündbares gasentwickelndes Material untergebracht ist, und ist mit mehreren Gasauslaßöffnungen in der Rohrwandung versehen. In dem Ringraum zwischen dem Innen- und dem Außenrohr befindet sich ein Filterelement, das im allgemeinen aus einer Vielzahl von Lagen aus Drahtgeflecht, Stahlwolle und/oder Glasfiber besteht. Das aus den Gasauslaßöffnungen des Innenrohres austretende Verbrennungsgas durchströmt die Filterelemente, die feste und flüssige bzw. kondensierte Verbrennungsprodukte aufnehmen, und tritt gereinigt über die Gasaustrittsöffnungen im Außenrohr aus. Die Filterelemente sind wegen der Drahtgeflechte relativ starr und biegesteif, weshalb sie sich nur mit großem Aufwand dem Ringraum entsprechend formen lassen. Bei einem Rundgasgenerator werden die Filtergewebematten in geschweißte Rundformen gebracht oder gewickelt. Aufgrund der Notwendigkeit, die Filterelemente an die geometrischen Gegebenheiten des Gasgeneratorgehäuses durch Verformung anpassen zu müssen, ist die Herstellung der bekannten Gasgeneratoren recht kostenintensiv. Speziell Rohr- und Rundgasgeneratoren lassen sich aufgrund ihrer durch das Rohrgehäuse vorgegebenen geometrischen Form nicht oder kaum an die räumlichen Gegebenheiten anpassen. Insoweit sind der Verwendung derartiger Gasgeneratoren für Kraftfahrzeug-Airbags Grenzen gesetzt.

Der Erfindung liegt die Aufgabe zugrunde, einen Gasgenerator sowie ein Gehäuse für einen Gasgenerator zu schaffen, in den bzw. in das zugeschnittene Filterelemente einsetzbar sind, ohne zuvor verformt oder in sonstiger Weise bearbeitet worden zu sein.

Zur Lösung dieser Aufgabe wird mit der Erfindung vorgeschlagen, daß das Gehäuse als im Strangpreßverfahren hergestelltes Strangpreßhohlprofil aus Aluminium oder einer Aluminiumlegierung ausgebildet ist und daß das strangpreßhohlprofil integrierte einander gegenüberliegende Halterungsabschnitte für das Filterelement aufweist, zwischen die das Filterelement über eines der offenen stirnseitigen Enden des Strangpreßhohlprofils einschiebbar ist, wobei sich die Drahtsiebmatten geradlinig zwischen den Halterungsabschnitten erstrecken.

Das aus Aluminium oder einer Aluminiumlegierung bestehende Gehäuse des Gasgenerators ist erfindungsgemäß im Strangpreßverfahren hergestellt und als Strangpreßhohlprofil ausgebildet. Das Gehäuse liegt also sozusagen als Meterware vor; durch Variation der Länge der abgeschnittenen Hohlprofilstücke lassen sich auf einfache Weise Gasgeneratoren mit unterschiedlich großen bzw. langen Gehäusen herstellen. In das Strangpreßhohlprofil integriert sind die Halterungsabschnitte für das Filterelement, die einander gegenüberliegend angeordnet sind, so daß ein Filterelement über eine der offenen stirnseitigen Enden des Strangpreßhohlprofils zwischen die Halterungsabschnitte einschiebbar ist. Das von den Halterungsabschnitten gehaltene Filterelement erstreckt sich geradlinig; die Drahtsiebmatten, mit denen das Filterelement versehen ist, müssen also nicht geformt oder in sonstiger Weise bearbeitet werden, um im Gehäuse des Gasgenerators eingebaut werden zu können. Auch eine Einfassung der Drahtsiebmatten, d.h. des Drahtgeflechtes des Filterelementes, insbesondere die Verschweißung der Drahtsiebmatten untereinander ist nicht erforderlich; die als ebene Filtergewebematten vorliegenden Filterelemente brauchen also lediglich dem Abstand der Halterungsabschnitte voneinander sowie der Länge des Strangpreßhohlprofils entsprechend zugeschnitten zu werden und können dann unmittelbar eingesetzt werden. Da die Halterungsabschnitte für das Filterelemente integraler Bestandteil des Strangpreßhohlprofils sind, erstrecken sie sich über die gesamte Länge des Profils, weshalb sich auch das Filterelement über die gesamte Länge des Profils erstreckt.

Vorteilhafterweise werden bei dem erfindungsgemäßen Gasgenerator kalandrierte Edelstahl-Filtergewebematten aufweisende Filterelemente eingesetzt.

Die Halterungsabschnitte umgreifen das Filterelement an seinen beiden gegenüberliegenden, der Gehäusewand zugewandten Rändern seitlich, so daß das Filterelement gegen Verschiebungen in Richtung der Verbrennungsgasströmung sowie entgegengesetzt dazu gesichert ist. Die Halterungsabschnitte sind vorzugsweise U-förmig, wobei die beiden abstehenden Schenkel der U-Form das Filterelement am Rand umgreifen.

Aufgrund der Herstellung des Gehäuses im Strangpreßverfahren ist der Querschnitt des Gehäuses, was seine Außenabmessungen sowie Gestalt angeht, in weiten Grenzen wählbar. Insbesondere kann das Strangpreßhohlprofil des Gehäuses rund, mehreckig oder mit anderer Außenkontur hergestellt werden. Die stirnseitigen Enden des Strangpreßhohlprofils werden durch der Außenkontur des Profils angepaßte Deckel verschlossen, wobei auf die Innenseite der Deckel vorzugsweise eine Flächendichtung zum gasdichten Verschließen des Gehäuses angeordnet wird. Die Vorteile des erfindungsgemäßen Gasgenerators bzw. Gehäuses sind neben einer Gewichtsminimierung insbesondere in der einfachen und damit kostengünstigen Herstellung des Gasgeneratorgehäuses als Strangpreßhohlprofil, der einfachen und damit kostengünstigen Gestaltung der Drahtsiebmatten-Filterelemente und dem einfachen Einbau der Filterelemente in das Strangpreßhohlprofil zu sehen.

Die beim Zünden bzw. Verbrennen des gasentwickelnden Materials entstehenden Verbrennungsgase treten über die Auslaßöffnung der Verbrennungskammer aus dieser aus, durchdringen das in Gasströmung betrachtet hinter der Auslaßöffnung angeordnete Filterelement und gelangen von festen und flüssigen (kondensierten) Verbrennungsprodukten gereinigt über die Gasaustrittsöffnung in der Gehäusewand in den Bereich außerhalb des Gasgenerators, wo sie im Falle eines Airbag zum Befüllen und Aufblasen eines Luftsackes verwendet werden. Selbstverständlich kann sowohl die Verbrennungskammer als auch die Gehäusewand mit mehreren Gasauslaß- bzw. Gasaustrittsöffnungen versehen sein. Ebenso können mehrere Halteabschnittpaare im Strangpreßhohlprofil integriert sein, um mehrere in Strömungsrichtung hintereinanderliegende Filterelemente mit Drahtsiebmatten unterschiedlicher lichter Maschenweite zu halten.

Vorteilhafterweise weist das Strangpreßhohlprofil zwischen der oder den Auslaßöffnungen der Verbrennungskammer und der oder den Gasaustrittsöffnungen in der Gehäusewand einen Durchlaßhohlraum auf, der von den Verbrennungsgasen durchströmt wird und in dem Halterungsabschnitte für gegebenenfalls mehrere Filterelemente angeordnet sind. Der Durchlaßhohlraum erlaubt es, das oder die Filterelemente auf unterschiedlichste Weise anzuordnen, insbesondere bei Verwendung mehrerer Filterelemente diese gegeneinander versetzt oder verdreht unterzubringen. Dementsprechend ist dann die Positionierung der Halterungsabschnittpaare für die Filterelemente zu wählen. Zum Umlenken der Verbrennungsgasströmung innerhalb des Durchlaßhohlraumes weist das Strangpreßprofil des Gehäuses integrierte, in den Durchlaßhohlraum hineinragende Zwischenwände auf. Diese Zwischenwände schotten die Gasaustrittsöffnung der Gehäusewand selbstverständlich nicht vollständig gegen die Auslaßöffnung in der Verbrennungskammer ab. Durch die Zwischenwände wird vielmehr ein sich über die gesamte Strangpreßhohlprofillänge erstreckender gegebenenfalls mehrfach gewundener die Auslaßöffnung der Verbrennungskammer mit der Gasaustrittsöffnung der Gehäusewand verbindender Durchlaßkanal für die Gasströmung geschaffen. Innerhalb dieses Durchlaßkanals können mehrere Filterelemente aus Drahtsiebmatten angeordnet werden, wozu entsprechend positionierte Halterungsabschnittpaare erforderlich sind. Die Umlenkung des Verbrennungsgasstromes hat darüber hinaus aber auch Reinigungsfunktion, da bei der Verbrennung entstehende Partikel oder kondensierte Flüssigkeitstropfen im Bereich der Umlenkung der Gasströmung infolge der auf sie wirkenden Fliehkräfte "aus dem Gasstrom ausscheren", also abgeschieden werden. Im Bereich der Umlenkung des Verbrennungsgasstromes werden daher vorteilhafterweise Abscheiderelemente angeordnet, bei denen es sich im Regelfall ebenfalls um Drahtsiebmattengeflechte handelt. Diese Geflechte sollen die abgeschiedenen Flüssigkeitstropfen und Feststoffpartikel festhalten, damit sie nicht mehr von der Gasströmung weitergetragen werden können. Aber auch im Bereich der Umlenkung auf der Innenfläche der Gehäusewand angeordnete Auffangtaschen mit schräg gegen die Gasströmung gerichteten Öffnungen zum Auffangen der Partikel und Flüssigkeitstropfen sind denkbar.

Wie oben bereits kurz erwähnt, sind die Halterungsabschnitte für das bzw. die Filterelemente als U-förmige Nuten ausgebildet, die die Filterelemente an zwei Seiten umgreifen. Vorzugsweise sind die Halterungsabschnitte als in der Gehäuseaußenwand integrierte Nuten ausgebildet. Sofern Zwischenwände zum Umlenken des Verbrennungsgasstromes im Durchlaßhohlraum zwischen der Auslaßöffnung in der Verbrennungskammer und der Gasaustrittsöffnung in der Gehäusewand vorgesehen sind, sind die Halterungsabschnitte für das bzw. die Filterelemente an den Zwischenwänden und auf der Innenfläche der Gehäuseaußenwand ausgebildet, wobei die Gehäuseaußenwand auf der Innenfläche eine U-förmige erste Nut aufweist und das dieser ersten Nut zugewandte Ende einer Zwischenwand eine zweite ebenfalls U-förmige Nut aufweist, die parallel zur ersten Nut verläuft; zwischen der ersten und der zweiten Nut, die jeweils das Filterelement seitlich umgreifen, ist das Filterelement angeordnet.

Es ist nicht auszuschließen, daß sich die Filterelemente beim Reinigen der Verbrennungsgasströmung "zusetzen". Sofern dies während des Druckaufbaus erfolgt, besteht die Gefahr, daß das Gehäuse birst, da der Druck nicht entweichen kann. Um ein Bersten des Gehäuses zu verhindern, ist gemäß einer vorteilhaften Weiterbildung der Erfindung vorgesehen, daß die Halterungsabschnitte eines Filterelementes eine Sollbruchstelle zum Freigeben des Filterelementes aus dem Halterungsabschnitt beim Überschreiten eines bestimmten auf das Filterelement wirkenden Verbrennungsgasdruckes aufweisen. Das aus seinem Halterungsabschnitt herausgerissene Filterelement gibt den Weg für die Verbrennungsgasströmung frei, die in diesem Falle nicht oder, wenn mehrere Filterelemente vorhanden sind, weniger gut gereinigt wird. Dies wird aber zugunsten eines unversehrt bleibenden Gehäuses in Kauf genommen. Vorzugsweise wird die Sollbruchstelle dadurch realisiert, daß die U-förmige Nut des betreffenden Filterelementes einen Seitenwandbereich verringerter Wandstärke aufweist.

Zum besseren Filtern des Verbrennungsgasstromes sind vorteilhafterweise mehrere Filterelemente vorgesehen, deren Drahtgewebematten unterschiedliche lichte Weiten aufweisen. Während das in Strömungsrichtung betrachtet erste Filterelement relativ grob ist und die großen Partikel zurückhält sowie als Nebeneffekt eine Abkühlung des Verbrennungsgasstromes bewirkt, sind die nachfolgenden Filterelemente immer feiner, um auch kleinere Partikel und kondensierte Flüssigkeitstropfen zurückzuhalten. Vorteilhaft ist es, wenn zusätzlich zu dem oder den Filterelementen ein Abscheiderelement aus mehreren übereinanderliegend angeordneten Drahtsiebmatten angeordnet ist. Ein derartiges Abscheiderelement wird von den Verbrennungsgasen nicht oder kaum durchströmt; vielmehr streicht der Verbrennungsgasstrom an dem Abscheiderelement vorbei. Das Abscheiderelement ist in einem Bereich des Durchlaßhohlraumes angeordnet, in dem der Verbrennungsgasstrom eine Umlenkung erfährt. Die auf die Partikel und die Flüssigkeitstropfen wirkenden Fliehkräfte bewirken, daß die Partikel und Flüssigkeitstropfen aus der Gasströmung herausgeschleudert werden, wo sie vom Abscheiderelement aufgefangen werden. Das Abscheiderelement fungiert also wie ein Filterelement, filtert jedoch aufgrund anderer physikalischer Gesetzmäßigkeiten. Da der Gasstrom das Abscheiderelement nicht oder nur im Oberflächenbereich durchdringt, stellt das Abscheiderelement für die Gasströmung einen geringeren Widerstand dar als ein Filterelement.

Das Abscheiderelement ist auf der Innenfläche der Gehäuseaußenwand von dieser gehalten angeordnet. Während des Filterungsvorganges setzt sich das Abscheiderelement allmählich mit Partikeln und Flüssigkeitstropfen zu. Daher muß die Dicke des Abscheiderelementes, d.h. die Anzahl der Drahtsiebmatten entsprechend gewählt werden. Um die Aufnahmekapazität des Abscheiderelementes zu erhöhen, ist die Innenfläche der Gehäuseaußenwand in ihrem an dem Abscheiderelement anliegenden Bereich mit Vertiefungen versehen, in die die das Abscheiderelement durchdringenden Partikel und/oder Flüssigkeitstropfen gelangen. Bei dieser Weiterbildung der Erfindung ist es möglich, das Abscheiderelement weniger stark auszubilden, da durch die Vertiefungen in der Gehäuseaußenwand eine das Abscheiderelement entlastende Depotwirkung erzielt wird.

Anstelle eines Abscheiderelementes in Form von Drahtsiebmatten könnte aber auch ein Material vorgesehen werden, das schädliche Verbrennungsprodukte katalytisch unschädlich macht.

Um sämtliche Filterelemente und gegebenenfalls vorhandene Abscheiderelemente zu entlasten, ist gemäß einer weiteren vorteilhaften Ausgestaltung der Erfindung vorgesehen, daß die Innenfläche der Gehäuseaußenwand in demjenigen Bereich des Durchlaßhohlraumes, der sich an die Auslaßöffnung der Verbrennungskammer anschließt, mehrere Aufnahmetaschen aufweist, die zur Auslaßöffnung hin offen sind. Diese Aufnahmetaschen, die fischgrätenartig angeordnet sind und deren Öffnungsebenen in spitzem Winkel zur Strömungsrichtung verlaufen, fangen die von der Verbrennungsgasströmung mittransportierten Partikel und/oder kondensierten Flüssigkeitstropfen auf. Die Aufnahmetaschen lassen sich genauso wie die einem Abscheiderelement zugeordneten Vertiefungen ins Strangpreßhohlprofil integrieren. Hierzu sind die Aufnahmetaschen durch nach innen vorstehende zumindest im Endbereich auf die Auslaßöffnung schräg zu gerichtete in der Gehäusewand integrierte Stege ausgebildet.

Die Deckelelemente werden vorteilhafterweise mit Schrauben befestigt, die in Aufnahmebohrungen in den Stirnenden des Strangpreßhohlprofils ausgebildet sind. Vorteilhafterweise weist das Strangpreßprofil des Gehäuses mehrere bei der Herstellung des Profils miterzeugte Durchgangsbohrungen auf, deren beidseitige Enden die Befestigungsschrauben über Gewinde aufnehmen. Der Durchmesser der Durchgangsbohrungen ist vorzugsweise gleich dem Kernlochbohrungsdurchmesser des einzuarbeitenden Gewindes. Die Kernlochbohrungen brauchen also nicht nachträglich eingebracht zu werden; sie entstehen vielmehr automatisch beim Herstellen des Profils.

Die Verbrennungskammer kann vorteilhafterweise ein separates rohrförmiges Element sein, dessen stirnseitige Enden offen sind und das über eine der offenen Seiten des Gehäuses in eine im Strangpreßhohlprofil ausgebildete Aufnahme-Durchgangsöffnung einschiebbar und an seinen offenen Enden wie die offenen stirnseitigen Enden des Strangpreßhohlprofils durch die Deckelelemente verschließbar ist. Vorteilhaft ist es, wenn die Verbrennungskammer mit bereits geschlossenen stirnseitigen Enden in das Strangpreßhohlprofil eingeschoben wird. Beim Zusammenbau des Gasgenerators kann nämlich in diesem Fall eine bereits mit gasentwickelndem Material gefüllte Verbrennungskammer eingesetzt werden. Hierdurch vereinfacht sich die Montage des Gasgenerators.

Der Querschnitt der Verbrennungskammer ist grundsätzlich beliebig. In jedem Fall sind Strangpreßhohlprofil und Verbrennungskammer derart aufeinander abgestimmt, daß beide formschlüssig und bei verschlossenen Strangpreßhohlprofil kraftschlüssig miteinander verbunden sind. Zur Festigkeitsoptimierung der Verbrennungskammer weist diese vorteilhafterweise einen Kreisquerschnitt auf.

Vorzugsweise ist die Verbrennungskammer integraler Bestandteil des Strangpreßhohlprofils des Gehäuses, wobei die Auslaßöffnung der Verbrennungskammer als sich über die gesamte Strangpreßprofillänge erstreckender Schlitz ausgebildet ist. Bei dieser Weiterbildung der Erfindung ist das Strangpreßhohlprofil derart ausgebildet, daß es einen (Verbrennungs-)Hohlraum aufweist, der die Verbrennungskammer darstellt und mit der gasentwickelnden Ladung befüllt wird. Die Verbindung des Verbrennungshohlraumes zum zu der Gasaustrittsöffnung führenden Durchlaßhohlraum erfolgt durch die in das Strangpreßhohlprofil eingebrachte Auslaßöffnung, bei der es sich wegen der Herstellung des Gasgeneratorgehäuses im Strangpreßverfahren um einen Schlitz handelt.

Sofern die Anzündeinheit in der Mitte der Verbrennungskammer angeordnet ist, also die Gehäuseaußenwand durchdringt und an dieser festgelegt ist, ist es vorteilhaft, wenn an der Außenfläche der Gehäuseaußenwand im Bereich der Verbrennungskammer zwei im Strangpreßprofil integrierte abstehende Haltevorsprünge mit einander zugewandten innenliegenden symmetrischen Ausnehmungen vorgesehen sind, zwischen die - über eines der stirnseitigen Enden des Strangpreßprofils - ein Tragelement für die Anzündeinheit einschiebbar ist, das sich zwischen den Ausnehmungen erstreckt und von diesen gehalten wird. Mit dem Tragelement verschraubt ist die Anzündeinheit, die sich im eingebauten Zustand durch zwei miteinander fluchtende Öffnungen in der Gehäuseaußenwand und der Verbrennungskammer oder - bei integraler Ausbildung von Gehäuse und Verbrennungskammer - durch eine Öffnung in der Gehäuseaußenwand hindurch bis in die Verbrennungskammer hinein erstreckt. Beim Einsetzen der Anzündeinheit während der Montage des Gasgenerators wird zunächst das Tragelement zwischen die Ausnehmungen bis zur Position der zwischen den Haltevorsprüngen angeordneten Öffnung der Gehäuseaußenwand geschoben, woraufhin die Anzündeinheit in das Tragelement eingesetzt wird, wobei sie bis in die Verbrennungskammer hineinragt. Gewindelöcher oder sonstige Manipulationen des Gasgeneratorgehäuses zur Befestigung der Anzündeinheit sind bei dieser Ausgestaltung der Erfindung also nicht erforderlich, was sich vorteilhaft auf die Herstellung des Gasgenerators auswirkt.

Bezüglich der Herstellung ist es vorteilhaft, wenn die Anzündeinheit an einem der stirnseitigen Enden der Verbrennungskammer angeordnet ist. In diesem Fall wird sie von dem zugehörigen Deckel des Gehäuses gehalten. Sofern die Verbrennungskammer an ihren stirnseitigen Enden durch separate Deckelelemente verschlossen ist, erstreckt sich die Anzündeinheit durch diese Deckelelemente hindurch bis ins Innere der Verbrennungskammer. Bei einseitiger Anbringung der Anzündeinheit ist es vorteilhaft, wenn die Anzündeinheit ein Flammleitrohr mit Öffnungen in der Rohrwand aufweist, das in das gasentwickelnde Material hineinragt und die von der Anzündeinheit erzeugte Anzündflammen über die Öffnungen gleichmäßig auf das gasentwickelnde Material verteilt.

Der Gasgenerator für einen Airbag ist normalerweise derart ausgelegt, daß das bei Zündung des gasentwickelnden Materials erzeugte Druckgas ausreicht, um den Luftsack prall zu füllen. Daneben sind aber auch Systeme entwickelt worden, bei denen die Füllung des Luftsackes durch von der austretenden Verbrennungsgasströmung mitgerissener Umgebungsluft unterstützt wird. Bei diesen Systemen würde das Druckgas alleine den Luftsack nicht prall füllen. Sofern der Gasstrom aus den Austrittsöffnungen ungehindert austreten kann, d.h. sich der Luftsack ungehindert aufweiten kann, reißt die Gasströmung Umgebungsluft mit. Diese Umgebungsluft wird über mit Einwegventilen versehene Lufteinlaßöffnungen in dem den Gasgenerator aufnehmenden starren Gehäuseteil des Airbag oder durch diesen Gehäuseteil durchdringende Luftzuführleitungen angesaugt. Sofern der Luftsack während seiner Aufweitung auf ein Hindernis stößt, entwickeln sich innerhalb des Luftsackes nicht die zum Mitreißen von Umgebungsluft erforderlichen Bedingungen. Der durch die Behinderung der Luftsackentfaltung entstehende höhere Sackinnendruck sorgt dafür, daß die Einwegventile, die im Regelfall als Rückstell-Klappenventile ausgebildet sind, die Lufteinlaßöffnungen früher als zur vollständigen prallen Luftsackfüllung erforderlich schließen. Die Folge davon ist, daß sich der Luftsack nicht prall mit dem Gas-Luftgemisch füllt. Diese Systeme sind insbesondere unter Sicherheitsaspekten entwickelt worden; wenn sich nämlich beim versehentlichen Auslösen eines Airbag im Bereich unmittelbar vor diesem eine Person, beispielsweise ein im Fußraum oder auf den Vordersitzen des Kraftfahrzeuges stehendes Kind befindet, kann dieses von dem scih aufweitenden Luftsack nicht mehr in gefährdendem Maße weg- bzw. gegen die Rücklehne oder den Vordersitz geschleudert werden.

Gasgeneratoren für die zuvor beschriebenen Airbag-Sicherheitssysteme benötigen also eine der oder den Gasaustrittsöffnungen nachgeschaltete Düse "zum Bündeln der Verbrennungsgasströmung. Eine derartige Düse kann in Form einer sogenannten Flachdüse auf einfache Weise ins Strangpreßhohlprofil des Gehäuses integriert werden. Hierzu ist gemäß einer vorteilhaften Weiterbildung der Erfindung vorgesehen, daß mehrere Gasaustrittsöffnungen in Längserstreckung des Strangpreßhohlprofils des Gehäuses angeordnet sind und daß am Gehäuse zu beiden Längsseiten der Reihe von Gasaustrittsöffnungen nach außen abstehende gekrümmte Randabschnitte angeordnet sind. Die Krümmung ist dabei derart gewählt, daß die lichte Weite zwischen den Randabschnitten zunächst in Strömungsrichtung betrachtet hinter den Gasaustrittsöffnungen abnimmt, um ab einer bestimmten Stelle zuzunehmen. Die hierbei vorzugsweise bogenförmig gekrümmten Randabschnitte bilden eine Flachdüse, die den Gasaustrittsöffnungen nachgeschaltet ist.

Vorteilhafterweise begrenzen die die Flachdüse bildenden Randabschnitte der Gehäuseaußenwand in dieser einen Schlitz. Ferner stehen die gekrümmten Randabschnitte geringfügig ins Gehäuseinnere über. Diese überstehenden Bereiche der Randabschnitte sind vorteilhafterweise von den mit hakenförmigen Enden versehenen hochstehenden Längsrändern eines mit mehreren Löchern versehenen Lochstreifens umgriffen. Der Lochstreifen ist über eines der stirnseitigen Enden des Strangpreßhohlprofils aufschiebbar. Die hier beschriebene Art der Ausbildung der Reihe von Gasaustrittsöffnungen im Lochstreifen sowie der Flachdüse hat insbesondere fertigungstechnische Vorteile; die Gasaustrittsöffnungen brauchen nämlich nicht mehr in der Gehäusewand - zwischen den gekrümmten Randabschnitten - eingebracht zu werden; vielmehr wird lediglich der vorgefertigte Lochstreifen eingeschoben. Im Lochstreifen können die Löcher wesentlich einfacher hergestellt werden als im Strangpreßhohlprofil, das eine den jeweiligen Platzverhältnissen entsprechende Außenkontur aufweisen kann und damit nicht derart einfach handzuhaben ist wie ein Materialstreifen, in den Löcher eingebracht werden müssen. Ferner können die Löcher in dem Lochstreifen größer ausgebildet sein als die lichte Weite der gekrümmten Randabschnitte, die den maximalen Durchmesser der Gasaustrittsöffnungen bestimmt, wenn diese direkt in die Gehäuseaußenwand eingebracht werden.

Eine weitere vorteilhafte Ausgestaltung der Erfindung zeichnet sich dadurch aus, daß zur Verbesserung des Mitreißens von Umgebungsluft infolge des aus der Flachdüse austretenden Verbrennungsgases im Bereich der Flachdüse einstückig mit dem Gehäuse verbundene und im Abstand zu diesen angeordnete Luftleitplatten vorgesehen sind, die sich über die gesamte Länge des Strangpreßhohlprofils des Gehäuses erstrecken, wobei im Verbindungsbereich zwischen Gehäuse und Luftleitplatten Durchgangslöcher zum Ansaugen der Umgebungsluft ausgebildet sind. Die Luftleitplatten stehen winklig zueinander, wobei sich ihr Abstand mit zunehmender Entfernung von den Gasaustrittsöffnungen verringert. Die Luftleitplatten erstrecken sich zu beiden Enden der Durchgangslöcher und reichen bis zum den Gasgenerator aufnehmenden starren Gehäuseteil des Airbag-Systems. Der Bereich des Gehäuseteils zwischen den Luftleitplatten, die Gasgenerator-Gehäuseaußenwand und die Luftleitplatten begrenzen zusammen einen Ansaugraum, der über die Lufteinlaßöffnung bei geöffneten Einwegventilen mit der Umgebung verbunden ist. Die über die Flachdüse austretende Verbrennungsgasströmung erzeugt im Bereich um die Flachdüse herum einen Unterdruck, der aufgrund der Durchgangslöcher auch in den Ansaugräumen zu beiden Seiten des Strangpreßprofilgehäuses herrscht. Aufgrund des Unterdrucks öffnen sich die als Klappenventile ausgebildeten Einwegventile, so daß Luft von außerhalb des starren Gehäuseteils des Airbag-Systems in den Luftsack hinein angesaugt wird. Dehnt sich der Luftsack aufgrund eines Hindernisses nicht weiter aus, steigt bei weiterhin austretenden Verbrennungsgasen der Innendruck im Luftsack an, weshalb die sich ab einem bestimmten Unterdruck öffnenden Einwegventile die Lufteinlaßöffnung verschließen. Die durch die Luftleitplatten realisierte Verbesserung des Mitreißens von Umgebungsluft trägt zu einer rascheren Füllung des Luftsackes bei.

Die Erfindung betrifft neben dem oben beschriebenen Gasgenerator auch ein Gehäuse für einen derartigen Gasgenerator, insbesondere ein Gehäuse für einen Airbag-Gasgenerator, mit einem Gehäusekörper, der an zwei gegenüberliegenden Enden offen ist und in seiner Gehäusewand mindestens eine Gasaustrittsöffnung aufweist, und einer im Gehäuse angeordneten, mindestens eine Auslaßöffnung aufweisenden Verbrennungskammer zur Aufnahme und Verbrennung von gasentwickelndem Material. Das erfindungsgemäße Gehäuse ist dadurch gekennzeichnet, daß der Gehäusekörper als im Strangpreßverfahren hergestelltes Strangpreßhohlprofil aus Aluminium oder einer Aluminiumlegierung ausgebildet ist und daß das Strangpreßhohlprofil integrierte einander gegenüberliegende Halterungsabschnitte für mindestens ein Filterelement aufweist, zwischen die das mindestens eine Filterelement über eines der offenen stirnseitigen Enden des Strangpreßhohlprofils einschiebbar ist.

Mit dem Strangpreßverfahren lassen sich Gehäusekörper vielfältigster Gestalt herstellen. Insbesondere lassen sich Gehäusekörper herstellen, deren äußere Gestalt den gegebenen Raumverhältnissen Rechnung tragen können und deren innerer Aufbau, insbesondere was die Ausgestaltung der Verbrennungskammer und des Durchlaßhohlraumes angeht, in weiten Grenzen frei wählbar ist. Die Merkmale vorteilhafter Ausgestaltungen des erfindungsgemäßen Gehäuses sind bereits oben im Zusammenhang mit der Beschreibung des Gasgenerators ausführlich beschrieben.

Nachfolgend werden anhand der Figuren Ausführungsbeispiele der Erfindung näher erläutert. Im einzelnen zeigen:
- Fig. 1: einen Querschnitt durch einen Gasgenerator gemäß einem ersten Ausführungsbeispiel,
- Fig. 2: einen Querschnitt durch einen Gasgenerator gemäß einem zweiten Ausführungsbeispiel,
- Fig. 3: einen Querschnitt durch einen Gasgenerator gemäß einem dritten Ausführungsbeispiel,
- Fig. 4: eine Ansicht entlang der Linie IV-IV der Fig. 3 (einen Längsschnitts - teilweise - durch den in Fig. 3 im Querschnitt dargestellten Gasgenerator),
- Fig. 5: einen Querschnitt durch einen Gasgenerator gemäß einem vierten Ausführungsbeispiel,
- Fig. 6: einen Querschnitt durch einen Gasgenerator mit den Gasaustrittsöffnungen nachgeschalteter Flachdüse und Luftleitplatten und
- Fig. 7: eine Querschnittsansicht durch den perspektivisch dargestellten Lochstreifen des Gasgenerators nach Fig. 6.

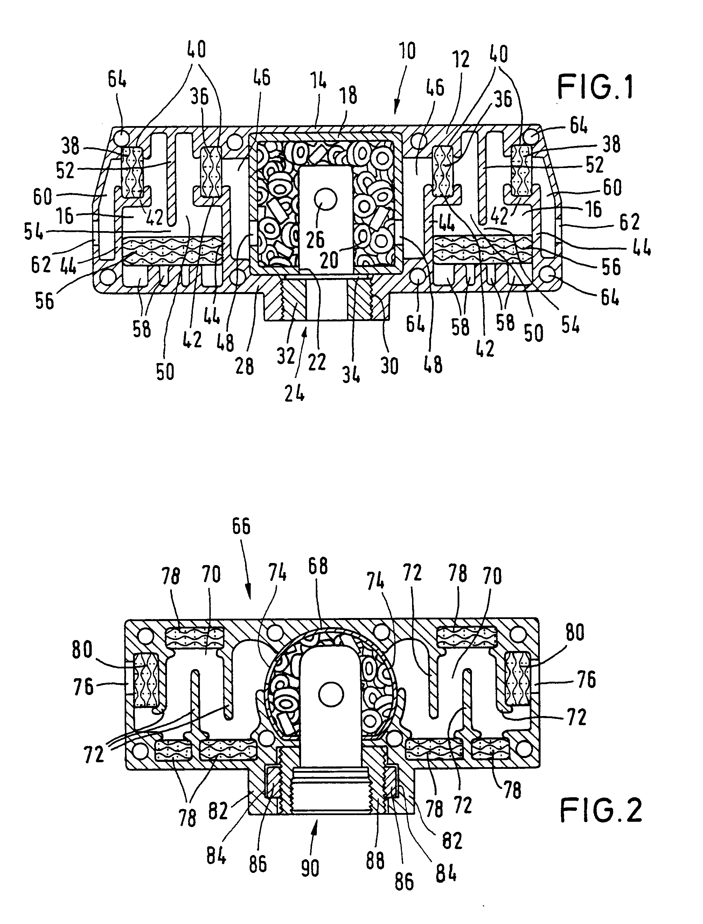

In Fig. 1 ist im Querschnitt das Gehäuse 10 eines Rohrgasgenerators gemäß einem ersten Ausführungsbeispiel der Erfindung dargestellt. Bei dem Gehäuse 10 handelt es sich um ein Strangpreßhohlprofil 12 aus Aluminium oder einer Aluminiumlegierung. Der Hohlraum im Strangpreßprofil 12 läßt sich in drei Bereiche unterteilen: einen mittleren Bereich 14 sowie zwei seitliche Durchlaßhohlräume 16 zu beiden Seiten des mittleren Bereiches 14. Die offenen stirnseitigen Enden des Strangpreßhohlprofils 12 bzw. Gehäuses 10 sind durch in Fig. 1 nicht dargestellte Deckelelemente verschlossen. Im mittleren Hohlraumbereich 14 ist die Verbrennungskammer 18 angeordnet, in der sich gasentwickelndes Material 20 in Form von Pellets befindet. Die Verbrennungskammer 18 weist im Querschnitt die Form eines Vierkantrohres mit abgerundeten Kanten auf; das Vierkantrohr ist formschlüssig in den mittleren Hohlraumbereich 14 des Strangpreßhohlprofiles 12 eingesetzt. Der mittlere Hohlraumbereich 14 ist also an die Außenkontur der Verbrennungskammer 18 angepaßt. Der Rechteckrohrquerschnitt der Hochdruck-Verbrennungskammer erlaubt eine gute Ausnutzung des im Strangpreßhohlprofils 12 vorhandenen Raums, so daß relativ viel gasentwickelndes Material trotz recht geringer Außenabmessungen des Gehäuses 10 in diesem untergebracht werden kann.

Die Verbrennungskammer 18 ist an ihren stirnseitigen Enden wie das Strangpreßhohlprofil 12 durch Deckelelemente verschlossen, was in Fig. 1 nicht dargestellt ist. Die Verbrennungskammer 18 weist eine Öffnung 22 auf, durch die sich hindurch eine Anzündeinheit 24 zum Zünden des gasentwickelnden Materials 20 erstreckt. Die Anzündeinheit 24 ist in ihrem in die Verbrennungskammer 18 hineinragenden Bereich mit Öffnungen 26 versehen, über die die Anzündschwaden (Anzündflammen) bei gezündeter Anzündeinheit austreten und das gasentwickelnde Material 20 zünden. Im Bereich der Öffnung 22 der Verbrennungskammer 18 ist in der Gehäusewand 28 des Strangpreßhohlprofils 12 eine mit der Öffnung 22 fluchtende koaxiale Aufnahmedurchgangsbohrung 30 mit Innengewinde ausgebildet, in die ein Haltering 32 mit Außengewinde eingeschraubt ist. Die Anzündeinheit 24 weist an ihrem unteren Ende einen Ringflansch 34 auf, der außen an der Verbrennungskammer 18 im Bereich des Randes der Öffnung 22 anliegt und bei eingeschraubtem Haltering 32 gegen die Verbrennungskammer 18 gedrückt wird. Die Anzündeinheit 24 wird elektrisch gezündet.

In den seitlichen Durchlaßhohlräumen 16 des Gehäuses 10 sind jeweils zwei Filterelemente 36,38 angeordnet, die hintereinandergeschaltet sind und von der Verbrennungsgasströmung durchströmt werden. Die Filterelemente 36, 38 bestehen aus einer geeigneten Kombination von kalandrierten Drahtgewebelagen aus Edelstahl und dazwischenliegenden Filterlagen, weshalb sie relativ starr und biegesteif sind. Die Filterelemente weisen einen in Strömungsrichtung betrachtet rechteckigen Querschnitt auf und erstrecken sich über die gesamte Länge des Strangpreßhohlprofiles 12. Die Filterelemente 36,38 werden an zwei gegenüberliegenden Rändern von in dem Strangpreßhohlprofil 12 integrierten Halterungsabschnitten gehalten. Bei den Halterungsabschnitten handelt es sich um im Querschnitt U-förmige Nuten 40, die auf der Innenseite der Gehäusewand 28 ausgebildet sind. Pro Filterelement sind zwei derartige Nuten 40 vorgesehen. Während die eine dieser Nuten 40 unmittelbar in der Gehäusewand integriert ist, ist die andere Nut 42 an den den Nuten 40 zugewandten Enden von Zwischenwänden 44 ausgebildet, die in die Durchlaßhohlräume 16 hineinragen. Die den Nuten 40 zugewandten Enden dieser Zwischenwände 44 sind gabelförmig ausgebildet und umgreifen die Filterelemente 36,38 auf der den Nuten 40 der Gehäusewand 28 abgewandten Seite. Die Nuten 40,42 verlaufen parallel zueinander und liegen einander gegenüber, so daß die Filterelemente 36,38 ohne zuvor verformt, eingefaßt oder am Rand verschweißt worden zu sein, in das Strangpreßhohlprofil 12 eingeschoben werden können.

Die Zwischenwände 44 mit den Filterelementen 36,38 unterteilen jeden Durchlaßhohlraum 16 in drei Teilhohlräume. Der erste Teilhohlraum 46 wird durch die den Durchlaßhohlraum 16 begrenzende Verbrennungskammerwand, das Filterelement 36 sowie die dieses haltende Zwischenwand 44 begrenzt. In der Verbrennungskammer 18 sind mehrere Auslaßöffnungen 48 angeordnet, über die die Verbrennungsgase in den ersten Teilhohlraum 46 strömen. Die Auslaßöffnungen 48 sind gegenüber dem Filterelement 36 versetzt angeordnet, so daß der Gasstrom im Teilhohlraum 46 eine Umlenkung erfährt, bevor er das Filterelement 36 durchströmt. Der Teilhohlraum 46 kann auch als Expansionsraum bezeichnet werden.

Zwischen den beiden Filterelementen 36,38 und den Zwischenwänden 44 bildet sich ein zweiter Teilhohlraum 50. In diesen zweiten Teilhohlraum 50 ragt eine weitere Zwischenwand 52 hinein, die zwischen den beiden auf einer Höhe angeordneten Filterelementen 36,38 verläuft und ein direktes Strömen der Verbrennungsgase von dem ersten Filterelement zum zweiten verhindert. Aufgrund der Anordnung der Zwischenwand 52 wird der Verbrennungsgasstrom im zweiten Teilhohlraum umgelenkt. Die Zwischenwand 52 durchquert nicht den gesamten Teilhohlraum 50; vielmehr bildet sich zwischen dem freien Ende der Zwischenwand 52 und der Gehäusewand 28 eine Durchlaßöffnung 54, die versetzt zu den Filterelementen 36,38 angeordnet ist. Der Über das Filterelement 36 in den zweiten Teilhohlraum 50 eintretende Verbrennungsgasstrom wird also um das Ende der Zwischenwand 52 herum um 180° umgelenkt, um zwischen der das Filterelement 38 haltenden Zwischenwand 44 und der Zwischenwand 52 zum Filterelement 38 zu strömen. Im Bereich der Durchlaßöffnung 54 ist ein Abscheiderelement 56 angeordnet, das aus einer geeigneten Kombination von kalandrierten Drahtgewebelagen besteht. Das Abscheiderelement 56 erstreckt sich nicht über die gesamte Durchlaßöffnung 54; der um die Zwischenwand 52 umgelenkte Gasstrom streicht also in erster Linie über die Oberfläche des Abscheiderelementes 56 hinweg. Das im Umlenkbereich angeordnete Abscheiderelement 56 nimmt Partikel und kondensierte Flüssigkeitstropfen auf, die vom Filterelement 36 noch nicht aufgefangen worden sind. Das Filterelement 36 hat in erster Linie Kühlfunktion und soll die Temperatur der Verbrennungsgase herabsetzen. Aufgrund der bei der Umlenkung um das Ende der Zwischenwand 52 herum auf die Partikel und Flüssigkeitstropfen wirkenden Fliehkräfte werden diese in das Abscheiderelement 56 "geschleudert", wo sie sich absetzen. Das Abscheiderelement 56 erstreckt sich zwischen den beiden die Filterelemente 36,38 haltenden Zwischenwände 44, an denen es mit zwei seiner gegenüberliegenden Seitenkanten anliegt und eingeklemmt gehalten wird. In dem Bereich, in dem das Abscheiderelement 56 an der Gehäusewand 28 anliegt, ist diese mit Ausnehmungen 58 in Form von Nuten versehen, in denen sich die bei der Verbrennung entstehenden Partikel (Schlacke) bzw. kondensierte Flüssigkeitstropfen ansammeln, die das Abscheiderelement 56 durchdringen. Die Ausnehmungen 58 vergrößern also die Aufnahmekapazität des Abscheiderelementes 56, indem dieses entlastet wird.

Nachdem der Verbrennungsgasstrom das Filterelement 38 durchströmt hat, gelangt er in den dritten Teilhohlraum 60, der von der Gehäusewand 28, dem Filterelement 38 und der dieses tragenden Zwischenwand 44 begrenzt ist. Im Bereich des den dritten Teilhohlraum 60 begrenzenden Abschnitts der Gehäusewand 28 sind in dieser Gasaustrittsöffnungen 62 ausgebildet, über die die Verbrennungsgase aus dem Gehäuse 10 herausströmen. Die herausströmenden Verbrennungsgase, die durch die beiden Filterelemente 36,38 sowie das Abscheiderelement 56 in ausreichendem Maße von Partikeln und Flüssigkeitstropfen befreit sind, gelangen, sofern der Gasgenerator Teil eines Airbag-Systems ist, in den Luftsack, den sie prall auffüllen.

Zur Befestigung der Deckel an den stirnseitigen Enden des Strangpreßhohlprofiles 12 weist dieses Durchgangsbohrungen 64 auf, die sich über die gesamte Länge des Strangpreßhohlprofils erstrecken und zusammen mit diesem erzeugt werden. Die Durchgangsbohrungen 64 werden an ihren Enden mit Innengewinden zur Aufnahme von Befestigungsschrauben versehen, durch die die Deckel mit dem Strangpreßhohlprofil 12 verschraubt werden.

In Fig. 2 ist ein zweites Ausführungsbeispiel eines Gasgeneratorgehäuses 66 dargestellt. Wie das in Fig. 1 dargestellte Gehäuse ist auch das Gehäuse 66 als im Strangpreßverfahren hergestelltes Strangpreßhohlprofil aus Aluminium ausgebildet. Zur Festigkeitsoptimierung der Verbrennungskammer 68 weist diese einen Kreisrohrquerschnitt auf. In die Durchlaßhohlräume 70 zu beiden Seiten der Verbrennungskammer 68 ragen drei Zwischenwände 72 hinein, die derart angeordnet sind, daß sich zwischen den Auslaßöffnungen 74 der Verbrennungskammer 68 und den Gasaustrittsöffnungen 76 des Gehäuses 66 ein mäanderförmiger Durchlaßkanal bildet. In den Bereichen, in denen der Verbrennungsgasstrom jeweils um 180° umgelenkt wird, sind in der Gehäusewand Abscheiderelemente 78 angeordnet, die sich in in der Gehäusewand integrierten Nischen befinden. Die Öffnungen der Nischen zum Durchlaßkanal hin sind verjüngt, so daß die Abscheiderelemente 78 in den Nischen gegen ein Herausreißen gesichert sind. Die Gasaustrittsöffnungen 76 sind durch ein Filterelement 80 abgedeckt. Zu erwähnen sei noch, daß die Gehäusewand im Bereich der Verbrennungskammer 68 zwei nach außen abstehende Haltevorsprünge oder -rippen 82 aufweist, die im Abstand zueinander angeordnet sind und auf ihren einander zugewandten Innenseiten mit U-förmigen Ausnehmungen 84 versehen sind. In diese Ausnehmungen 84 ist ein Tragring 86 mit zwei einander gegenüberliegenden abgeflachten Seitenkanten eingeschoben. Der Tragring 86 weist ein Innengewinde auf, in das ein im wesentlichen zylindrischer Haltekörper 88 mit Außengewinde eingeschraubt ist. Aufgrund der abgeflachten Seitenkanten wird ein Verdrehen des Tragrings 86 beim Einschrauben der Anzündeinheit 90 verhindert. An dem Haltekörper 88 ist in hier nicht näher beschriebener Weise die Anzündeinheit 90 befestigt, das sich im eingebauten Zustand durch miteinander fluchtende Öffnungen im Gehäuse und der Verbrennungskammer bis in diese hinein erstreckt.

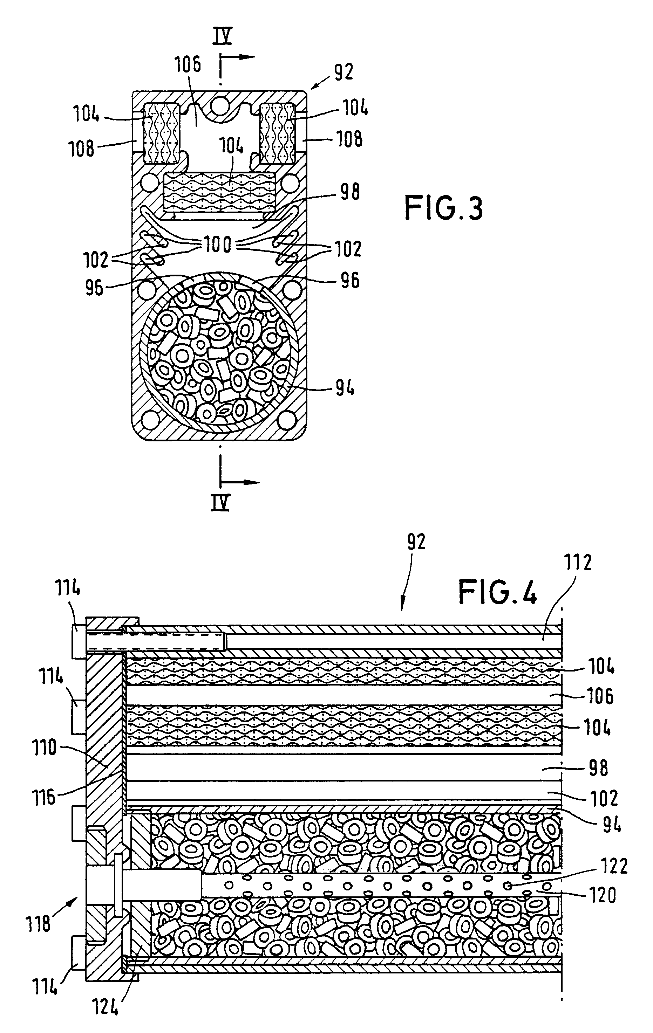

Das Gehäuse 92 eines Gasgenerators gemäß einem dritten Ausführungsbeispiel ist in Querschnitts- und in Längs-schnitt-Ansicht in den Fign. 3 und 4 dargestellt. Ein Unterschied dieses Gehäuses 92 gegenüber den in den Fign. 1 und 2 gezeigten besteht darin, daß die Verbrennungskammer 94 im Randbereich des Strangpreßhohlprofils des Gehäuses 92 angeordnet ist, der Aufbau des Gehäuses 92 also unsymmetrisch ist. Die Verbrennungskammer 94 weist zwei Reihen von nebeneinanderliegenden Auslaßöffnungen 96 auf, über die die Verbrennungsgase bei gezündetem gasentwickelndem Material in den sich anschließenden Durchlaßhohlraum 98 gelangen. Auf der Innenseite der Gehäusewand sind im Bereich des Durchlaßhohlraumes 98 mehrere Aufnahmetaschen 100 ausgebildet. Die Aufnahmetaschen 100 sind durch im Abstand zueinander angeordnete schräg auf die Auslaßöffnungen 96 der Verbrennungskammer 94 zu gerichtete Stege 102 gebildet. Die Aufnahmetaschen 100 haben die Aufgabe, von der Verbrennungsgasströmung mittransportierte Schlacke und sonstige Partikel sowie Flüssigkeitstropfen aufzufangen, um somit die nachgeschalteten Filterelemente 104 zu entlasten. Wie bei den Ausführungsbeispielen gemäß den Fign. 1 und 2 handelt es sich auch bei den Filterelementen 104 des in den Fign. 3 und 4 dargestellten Gasgeneratorgehäuses um eine geeignete Kombination von Drahtgewebe- und Filterlagen. Nach dem Durchdringen des ersten Filterelementes 104 gelangen die Verbrennungsgase in einen Hohlraum 106, den sie nach Durchdringen zweier weiterer Filterelemente 104 verlassen, die um 90° gedreht gegenüber dem ersten Filterelement 104 und unmittelbar vor den Gasaustrittsöffnungen 108 angeordnet sind.

Wie anhand von Fig. 4 zu erkennen ist, sind die Deckel 110 an den stirnseitigen Enden des Strangpreßhohlprofils des Gehäuses 92 mit diesem verschraubt. Zu diesem Zweck weist das Strangpreßhohlprofil mehrere Durchgangsbohrungen 112 auf, deren Enden mit einem Innengewinde zur Aufnahme der Befestigungsschrauben 114 versehen sind. Die Deckel 110 sind auf ihren Innenseiten mit Flachdichtungen 116 zum gasdichten Verschließen der stirnseitigen Enden des Gehäuses 92 versehen. Wie ebenfalls anhand von Fig. 4 zu erkennen ist, ist die Anzündeinheit 118 nicht in der Gehäusewand, sondern an einem der Deckel 110 befestigt. Die Anzündeinheit 118, die in Fig. 4 lediglich schematisch dargestellt ist, weist ein Flammleitrohr 120 mit mehreren Öffnungen 122 auf, das weit in das gasentwickelnde Material der Verbrennungskammer 94 eintaucht und über das die Anzündschwaden gleichmäßig verteilt zum gasentwickelnden Material geleitet werden. Bei dem in den Fign. 3 und 4 dargestellten Ausführungsbeispiel des Gasgeneratorgehäuses 92 ist die Verbrennungskammer 94 über separate Deckel 124 an ihren stirnseitigen Enden verschlossen. Außen an den separaten Deckeln 124 liegen jeweils die Deckel 110 für das Gasgeneratorgehäuse 92 an, die ein "Absprengen" der Deckel 124 der Verbrennungskammer 94 bei Zündung des gasentwickelnden Materials verhindern. Die Anzündeinheit 118 ist durch geeignete hier nicht näher beschriebene Mittel an den Deckeln 110 des Gasgeneratorgehäuses 92 befestigt bzw. gehaltert.

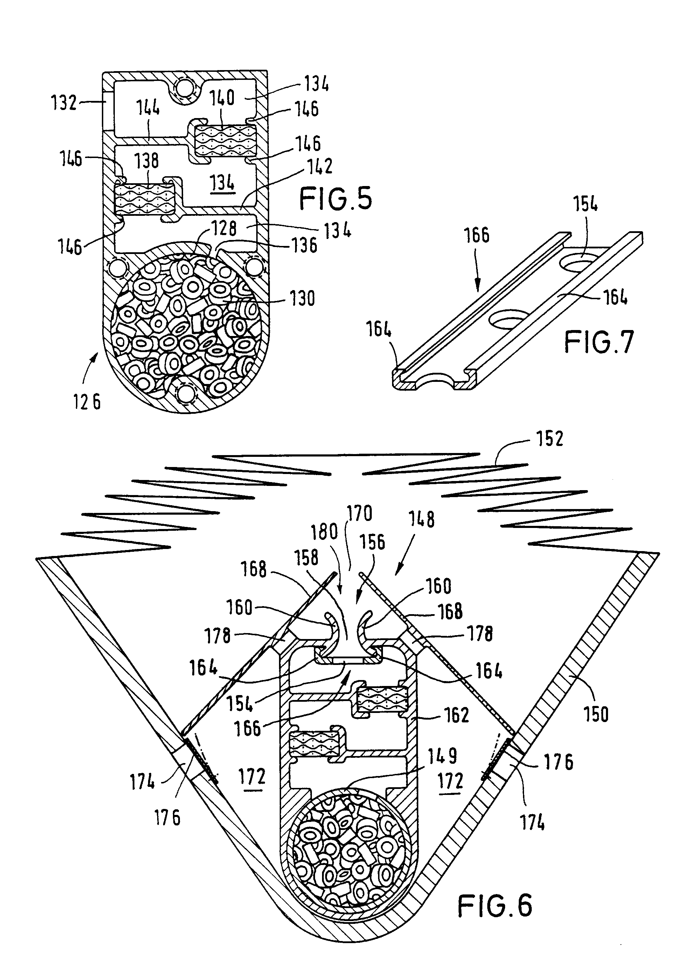

In Fig. 5 ist das Gehäuse 126 eines Gasgenerators gemäß einem weiteren Ausführungsbeispiel dargestellt. Die Besonderheit des Gehäuses 126 besteht darin, daß die Verbrennungskammer 128 integraler Bestandteil des Strangpreßhohlprofils ist. Das gasentwickelnde Material 130 wird also direkt in den die Verbrennungskammer 128 bildenden Hohlraum des Strangpreßprofils des Gehäuses 126 eingefüllt. Die Auslaßöffnung, über die die Verbrennungsgase aus der Verbrennungskammer 128 heraus in den zu den Gasaustrittsöffnungen 132 des Gehäuses 126 führenden Durchlaßhohlraum 134 gelangen, ist als sich über die Länge des Strangpreßhohlprofils erstreckender Schlitz 136 ausgebildet.

Im Durchlaßhohlraum 134 befinden sich zwei hintereinandergeschaltete Filterelemente 138,140, die versetzt zueinander angeordnet sind und von als U-förmige Nuten ausgebildeten Halterungsabschnitten zwischen der Gehäusewand und in den Durchlaßhohlraum 134 hineinragenden Zwischenwänden 142,144 gehalten sind. Die die Filterelemente 138,140 haltenden Zwischenwände 142,144 sind gabelförmig ausgebildet und umgreifen die Filterelemente 138,140 seitlich. Die U-förmigen Nuten an der Gehäusewand sind durch im Abstand zueinander angeordnete Rippen 146 gebildet. Im gabelförmigen Ende der das in Strömungsrichtung betrachtet erste Filterelement 138 haltenden Zwischenwand 142 ist eine Sollbruchstelle ausgebildet, die ein Freigeben des Filterelementes 138 bei Überschreitung eines bestimmten Verbrennungsgasdruckes erlaubt. Die Sollbruchstelle an den Halterungsabschnitten für das erste Filterelement 138 wird dadurch geschaffen, daß die Rippe 146, die an der der Verbrennungskammer 128 abgewandten Seite des Filterelementes 138 anliegt, im Übergangsbereich zur Gehäusewand eine verringerte Stärke aufweist. Ebenso ist es aber auch möglich, daß, wie in Fig. 5 gezeigt, derjenige Abschnitt des gabelförmigen Endes der Zwischenwand 142, der an der der Verbrennungskammer 128 abgewandten Seite des Filterelementes 138 anliegt, eine verringerte Wandstärke aufweist. Sollte sich das Filterelement 138 zugesetzt haben, so daß der Druck der aus dem Auslaßschlitz 136 austretenden Verbrennungsgase ansteigt, bricht beim Überschreiten einer bestimmten auf das Filterelement 138 wirkenden Kraft deren Halterung, bevor das Gehäuse 126 aufplatzt. Das Einbauen von Sollbruchstellen an den Halterungsabschnitten gegebenenfalls sämtlicher Filterelemente ist also unter Sicherheitsaspekten zu empfehlen.

In den Fign. 6 und 7 ist das Gehäuse 148 eines Gasgenerators gemäß einem letzten Ausführungsbeispiel der Erfindung dargestellt. In Fig. 6 ist auch das den Gasgenerator aufnehmende starre Gehäuseteil 150 eines Airbag-Systems mit angedeutetem zusammengelegtem Luftsack 152 dargestellt. Der Aufbau des Gasgeneratorgehäuses 148 entspricht, was die Anordnung der Zwischenwände, Filterelemente und Brennkammer angeht, dem in Fig. 5 gezeigten Gasgeneratorgehäuse 126. Die Verbrennungskammer 149 des Gehäuses 148 ist jedoch als separates Teil mit kreisrundem Querschnitt ausgebildet. Im Unterschied zum Ausführungsbeispiel nach Fig. 5 ist beim Gehäuse 148 den Gasaustrittsöffnungen 154 eine Flachdüse 156 nachgeschaltet. Bei der Flachdüse 156 handelt es sich im wesentlichen um einen im Strangpreßhohlprofil des Gehäuses 148 ausgebildeten Schlitz 158. Der Schlitz 158 wird an seinen Längsseiten durch gekrümmte Randabschnitte 160 gebildet, die einstückig an der Gehäusewand 162 angeformt sind. Die gekrümmten Randabschnitte 160 stehen nach außen und nach innen über die Gehäusewand 162 über. Die Anordnung der Randabschnitte 160 und deren Krümmung ist derart gewählt, daß sich die lichte Weite der Randabschnitte 160 ausgehend vom Schlitz 158 der Gehäusewand 162 mit zunehmendem Abstand von der Gehäusewand 162 zunächst verringert, um sich anschließend zu vergrößern. Die hochstehenden gekrümmten Randabschnitte 160, die sich über die gesamte Länge des Strangpreßhohlprofils erstrecken, bilden zusammen mit dem Schlitz 158 die Flachdüse 156.

Die ins Gehäuseinnere überstehenden Bereiche der Randabschnitte 160 sind von den hochstehenden, hakenförmig ausgebildeten Längsrändern 164 eines Lochstreifens 166 umgriffen, in dem die Gasaustrittsöffnungen 154 ausgebildet sind. Der Lochstreifen 166 ist formschlüssig mit den nach innen überstehenden Enden der Randabschnitte 160 verbunden und hält die Gehäusewand 162 im Bereich des Schlitzes 158 zusammen. Der Vorteil des Einsatzes eines separaten Lochstreifens 166 besteht insbesondere darin, daß der Durchmesser der in diesen eingebrachten Gasaustrittsöffnungen 154 größer bemessen sein kann als der kleinste Abstand der gebogenen Randabschnitte 160 voneinander.

Einstückig mit der Gehäusewand 162 verbunden sind zwei Luftleitplatten 168, die zu beiden Längsseiten der Flachdüse 156 in deren Bereich angeordnet sind. Die beiden Luftleitplatten 168 verlaufen in einem spitzem Winkel zueinander, wobei sich ihre einander zugewandten oberen Enden oberhalb der Flachdüse 156 befinden und im Abstand zueinander angeordnet sind, die Kanten der oberen Enden also einen mit der Flachdüse 156 fluchtenden Spalt 170 begrenzen. Die Quererstreckung der Luftleitplatten 168 in zur Längserstreckung des Strangpreßprofils senkrechter Richtung ist derart bemessen, daß die Luftleitplatten 168 mit ihren den oberen Enden gegenüberliegenden unteren Enden bis an den starren Gehäuseteil 150 reichen und dort anstoßen. Das starre Gehäuseteil 150, die Luftleitplatten 168 und die Gehäuseaußenwand 162 bilden Luftansaugräume 172 zu beiden Längsseiten des Gasgeneratorgehäuses 148. In dem starren Gehäuseteil 150 sind in die Luftansaugräume 172 führende Belüftungsöffnungen 174 ausgebildet, die von auf der Innenseite des starren Gehäuseteils 150 einseitig befestigten Lappen 176 aus einem federelastischen Material zugedeckt sind. Die Lappen 176 stellen Klappen-Einwegventile zum selbsttätigen Öffnen der Belüftungs-Öffnungen 174 bei Unterdruck in den Luftansaugräumen 172 und Schließen dieser Belüftungsöffnungen 174 bei Druckanstieg über den zum öffnen erforderlichen Unterdruck dar. In den massiven Verbindungsbereichen zwischen den Luftleitplatten 168 und der Gehäusewand 162 sind Luftansaugöffnungen 178 angeordnet, über die die aus der Flachdüse 156 austretende Verbrennungsgasströmung Luft in den Raum 180 zwischen die Luftleitplatten 168 um die Flachdüse 156 herum ansaugt.

Bei dem in Fig. 6 dargestellten Airbag-System wird die angesaugte Luft zum Füllen des Luftsackes 152 zwingend benötigt. Es ist daher erforderlich, daß die austretende Verbrennungsgasströmung möglichst viel Luft mitreißt, so daß eine große Menge Luft von außen angesaugt wird. Die Nachschaltung der Flachdüse 156 "konzentriert" die Verbrennungsgasströmung, so daß ein gebündelter Gasstrom entsteht. Dieser Gasstrom sorgt in den über die Luftansaugöffnungen 178 miteinander verbundenen Räumen 180 und 172 für einen die Belüftungsöffnungen 174 öffnenden Unterdruck, so daß von außen Umgebungsluft angesaugt wird. Sollte sich der Luftsack 152 bei noch ausströmenden Verbrennungsgasen nicht wie vorgesehen entfalten können, steigt der Druck in den Räumen 180 und 172 an, so daß sich die Belüftungsöffnungen 174 schließen. Ein pralles Füllen des Luftsackes 152 ist nun nicht mehr möglich. Sowohl die Flachdüse als auch die Luftleitplatten lassen sich auf einfache Weise im Strangpreßverfahren als integrale Bestandteile des Gehäuses 148 erzeugen.

## Patentansprüche

1. Gasgenerator, insbesondere für Airbag, mit
- einem Gehäuse (10;66;92;126;148), das an zwei gegenüberliegenden stirnseitigen Enden offen ist und in seiner Gehäusewand (28;162) mindestens eine Gasaustrittsöffnung (62;76;108; 132;154) aufweist,
- zwei Deckelelementen (110) zum Verschließen der stirnseitigen Enden des Gehäuses (10;66;92; 126;148),
- einer im Gehäuse (10;66;92;126;148) angeordneten, mindestens eine Auslaßöffnung (48;96; 136) aufweisenden Verbrennungskammer (18;68; 94;128;149) zur Aufnahme und Verbrennung von mittels einer Anzündeinheit (24;90;118) zündbarem gasentwickelndem Material (20;130) und
- mindestens einem in dem Gehäuse (10;66;92;126; 148) angeordneten, mehrere Drahtsiebmatten aufweisenden Filterelement (36,38;80;104;138,140) zum Reinigen der Verbrennungsgasströmung,
**dadurch gekennzeichnet,**
- daß das Gehäuse (10;66;92;126;148) als im Strangpreßverfahren hergestelltes Strangpreßhohlprofil aus Aluminium oder einer Aluminiumlegierung ausgebildet ist und
- daß das Strandpreßhohlprofil integrierte einander gegenüberliegende Halterungsabschnitte (40,42;146) für das Filterelement (36,38;80; 104;138;140) aufweist, zwischen die das Filterelement (36,38;80;104;138;140) über eines der offenen stirnseitigen Enden des Strangpreßhohlprofils einschiebbar ist, wobei sich die Drahtsiebmatten geradlinig zwischen den Halterungsabschnitten (40,42;146) erstrecken.

2. Gasgenerator nach Anspruch 1, dadurch gekennzeichnet, daß zwischen der Auslaßöffnung (48;96;136) der Verbrennungskammer (18;68;94;128;149) und der Gasaustrittsöffnung (62;76;108;132;154) ein Durchlaßhohlraum (16;70;98;134) für die Verbrennungsgasströmung ausgebildet ist, in dem die Halterungsabschnitte (40,42;146) angeordnet sind.

3. Gasgenerator nach Anspruch 1 oder 2, dadurch gekennzeichnet, daß das Strangpreßprofil des Gehäuses zum Umlenken des Verbrennungsgasstromes integrierte, in den Durchlaßhohlraum (16;70;98; 134) zwischen der Auslaßöffnung (48;96;136) der Verbrennungskammer (18;68;94;128;149) und der Gasaustrittsöffnung des Gehäuses (10;66;92;126;148) hineinragende Zwischenwände (44;62;142,144) aufweist.

4. Gasgenerator nach einem der Ansprüche 1 bis 3, dadurch gekennzeichnet, daß Halterungsabschnitte (40,42;146) für mehrere Filterelemente (36,38;80; 104;138,140) vorgesehen sind, wobei die lichten Maschenweiten der Drahtsiebmatten der Filterelemente (36,38;80;104;138;140) unterschiedlich sind.

5. Gasgenerator nach Anspruch 4, dadurch gekennzeichnet, daß die Filterelemente (36,38;80;104;138,140) gegeneinander versetzt und/oder verdreht angeordnet sind.

6. Gasgenerator nach einem der Ansprüche 1 bis 5, dadurch gekennzeichnet, daß die Halterungsabschnitte als in der Gehäuseaußenwand (28;162) integrierte U-förmige Nuten (40,42) zum seitlichen Umgreifen des mindestens einen Filterelements (36,38;80;104;138,140) ausgebildet sind.

7. Gasgenerator nach einem der Ansprüche 3 bis 6, dadurch gekennzeichnet, daß die Halterungsabschnitte an den Zwischenwänden und auf der Innenfläche der Gehäuseaußenwand ausgebildet sind, wobei die Gehäuseaußenwand auf der Innenfläche eine U-förmige erste Nut (40) aufweist und das dieser ersten Nut (40) zugewandte Ende einer Zwischenwand (44) ebenfalls eine U-förmige zweite Nut (42) aufweist, die parallel zur ersten Nut (40) verläuft.

8. Gasgenerator nach einem der Ansprüche 1 bis 7, dadurch gekennzeichnet, daß die Halterungsabschnitte (40,42;146) eines Filterelementes (36,38; 80;104;138,140) eine Sollbruchstelle zum Freigeben des Filterelementes (36,48;80;104;138,140) aus dem Halterungsabschnitt (40,42;146) bei Überschreiten eines bestimmten auf das Filterelement (36,38;80; 104;138,140) wirkenden Verbrennungsgasdruckes aufweisen.

9. Gasgenerator nach Anspruch 7 und 8, dadurch gekennzeichnet, daß einer der Seitenwandabschnitte der U-förmigen Nuten (40,42) auf der Innenfläche der Gehäuseaußenwand (28;162) und/oder der Zwischenwand (44;72;142,144) einen Bereich verringerter Wandstärke aufweist.

10. Gasgenerator nach einem der Ansprüche 3 bis 10, dadurch gekennzeichnet, daß in dem Bereich einer Umlenkung des Verbrennungsgasstromes ein Abscheiderelement (56;78) aus mehreren übereinanderliegend angeordneten Drahtsiebmatten angeordnet ist, das von der Verbrennungsgasströmung mittransportierte Partikel und/oder kondensierte Flüssigkeitstropfen auffängt.

11. Gasgenerator nach Anspruch 10, dadurch gekennzeichnet, daß das Abscheiderelement (56;78) auf der Innenfläche der Gehäuseaußenwand (28;172) anliegend von dieser gehalten angeordnet ist.

12. Gasgenerator nach Anspruch 11, dadurch gekennzeichnet, daß die Innenfläche der cehäuseaußenwand (28) in ihrem an dem Abscheiderelement (56) anliegenden Bereich mit Vertiefungen (58) zum Aufnehmen von das Abscheiderelement (56) durchdringenden Partikeln und/oder kondensierte Flüssigkeitstropfen versehen ist.

13. Gasgenerator nach einem der Ansprüche 1 bis 12, dadurch gekennzeichnet, daß die Innenfläche der Gehäuseaußenwand in dem Bereich des sich an die Auslaßöffnung (96) der Verbrennungskammer (94) anschließenden Durchlaßhohlraumes (98) mehrere zur Auslaßöffnung (96) hin offene Aufnahmetaschen (100) für von der Verbrennungsgasströmung mittransportierte Partikel und/oder kondensierte Flüssigkeitstropfen aufweist.

14. Gasgenerator nach Anspruch 13, dadurch gekennzeichnet, daß die Aufnahmetaschen (100) durch nach innen vorstehende zumindest im Endbereich auf die Auslaßöffnung (94) zu gerichtete in der Gehäusewand integrierte Stege (102) ausgebildet sind.

15. Gasgenerator nach einem der Ansprüche 1 bis 14, dadurch gekennzeichnet, daß das Strangpreßprofil des Gehäuses (10;66;92;126;148) mehrere bei der Herstellung des Strangpreßprofils miterzeugte Durchgangsbohrungen (64;112) zur Aufnahme von Befestigungsschrauben (114) zum Befestigen der Deckelelemente (110) an den stirnseitigen Enden des Strangpreßprofils aufweist.

16. Gasgenerator nach einem der Ansprüche 1 bis 15, dadurch gekennzeichnet, daß die Verbrennungskammer (18;68;94;149) ein separates rohrförmiges Element ist, dessen Enden offen sind und das über eine der offenen Seiten des Gehäuses (10;66;92;126;148) in eine im Strangpreßprofil ausgebildete Aufnahme-Durchgangsöffnung (14) einschiebbar und an seinen Enden wie die offenen Seiten des Gehäuses durch die Deckelelemente (110) oder durch separate Deckel (124) verschließbar ist.

17. Gasgenerator nach einem der Ansprüche 1 bis 15, dadurch gekennzeichnet, daß die Verbrennungskammer (128) integraler Bestandteil des Strangpreßhohlprofils des Gehäuses (126) ist, wobei die Auslaßöffnung der Verbrennungskammer (128) als sich über die gesamte Strangpreßprofillänge erstreckender Schlitz (136) ausgebildet ist.

18. Gasgenerator nach einem der Ansprüche 1 bis 17, dadurch gekennzeichnet, daß an der Außenfläche der Gehäuseaußenwand im Bereich der Verbrennungskammer (68) zwei im Strangpreßprofil integrierte abstehende Haltevorsprünge (82) mit einander zugewandten symmetrischen Ausnehmungen (84) vorgesehen sind und daß über eines der stirnseitigen Enden des Strangpreßprofils in die Ausnehmungen (84) ein sich zwischen diesen erstreckendes Tragelement (86) für die Anzündeinheit (90) einschiebbar ist, wobei sich die Anzündeinheit (90) im eingebauten Zustand durch zwei miteinander fluchtende Öffnungen in der Gehäuseaußenwand und der Verbrennungskammer (68) oder - bei integraler Ausbildung von Gehäuse und Verbrennungskammer - durch eine Öffnung in der Gehäuseaußenwand hindurch bis in die Verbrennungskammer (68) hinein erstreckt.

19. Gasgenerator nach einem der Ansprüche 1 bis 17, dadurch gekennzeichnet, daß die Anzündeinheit (118) an einem der stirnseitigen Enden der Verbrennungskammer (94) angeordnet und von dem zugehörigen Deckelelement (110) des Gehäuses (92) gehalten ist.

20. Gasgenerator nach Anspruch 19, dadurch gekennzeichnet, daß die Anzündeinheit (118) ein in das gasentwickelnde Material eingetauchtes Flammleitrohr (120) mit Öffnung (122) in der Rohrwand aufweist.

21. Gasgenerator nach einem der Ansprüche 1 bis 20, dadurch gekennzeichnet, daß mehrere Gasaustrittsöffnungen (154) in Längserstreckung des Strangpreßprofils des Gehäuses (148) angeordnet sind und daß zu beiden Längsseiten der Reihe von Gasaustrittsöffnungen (154) nach außen abstehende im Strangpreßprofil integrierte gekrümmte Randabschnitte (160) angeordnet sind, die eine den Gasaustrittsöffnungen (154) nachgeschaltete Düse (156) bilden.

22. Gasgenerator nach Anspruch 21, dadurch gekennzeichnet, daß die die Düse (156) bildenden Randabschnitte (160) der Gehäuseaußenwand (162) einen Schlitz (158) begrenzen und geringfügig ins Gehäuseinnere überstehen und daß ein mit mehreren Löchern versehener Lochstreifen (166) vorgesehen ist, der hochstehende Längsränder (164) mit hakenförmigen Enden zum Umgreifen der nach innen überstehenden Bereiche der Randabschnitte (160) aufweist und über eines der stirnseitigen Enden des Strangpreßprofils aufschiebbar ist.

23. Gasgenerator nach Anspruch 21 oder 22, dadurch gekennzeichnet, daß zur Verbesserung des Mitreißens von Umgebungsluft infolge des aus der Düse (156) ausströmenden Verbrennungsgases im Bereich der Düse (156) einstückig mit dem Gehäuse (148) verbundene und im Abstand zu diesen angeordnete Luftleitplatten (168) vorgesehen sind, die sich über die gesamte Länge des Strangpreßprofils des Gehäuses (148) erstrecken, wobei im Verbindungsbereich zwischen Gehäuse (148) und Luftleitplatten (168) Durchgangslöcher (170) zum Ansaugen der Umgebungsluft ausgebildet sind.

24. Gehäuse für einen Gasgenerator, insbesondere für einen Airbag-Gasgenerator, mit
- einem Gehäusekörper (10;66;92;126;148), der an zwei gegenüberliegenden Enden offen ist, und in seiner Gehäusewand (28;162) mindestens eine Gasaustrittsöffnung (62;76;108;132;154) aufweist, und
- einer im Gehäusekörper (10;66;92;126;148) angeordneten, mindestens eine Auslaßöffnung (48;96; 136) aufweisenden Verbrennungskammer (18;68; 94;128;149) zur Aufnahme und Verbrennung von gasentwickelndem Material (20;130),
**dadurch gekennzeichnet,**
- daß der Gehäusekörper (10;66;92;126;148) als im Strangpreßverfahren hergestelltes Strangpreßhohlprofil aus Aluminium oder einer Aluminiumlegierung ausgebildet ist und
- daß das Strangpreßhohlprofil integrierte einander gegenüberliegende Halterungsabschnitte (40,42;146) für mindestens ein Filterelement (36,38;80;104;138,140) aufweist, zwischen die das mindestens eine Filterelement (36,38;80; 104;138;140) über eines der offenen stirnseitigen Enden des Strangpreßhohlprofils einschiebbar ist.

25. Gehäuse nach Anspruch 24, dadurch gekennzeichnet, daß zwischen der Auslaßöffnung (48;96;136) der Verbrennungskammer (18;68;94;128;149) und der Gasaustrittsöffnung (62;76;108;132;154) ein Durchlaßhohlraum (16;70;98;134) für die Verbrennungsgasströmung ausgebildet ist, in dem die Halterungsabschnitte (40,42;146) angeordnet sind.

26. Gehäuse nach Anspruch 25, dadurch gekennzeichnet, daß das Strangpreßprofil zum Umlenken des Verbrennungsgasstromes integrierte, in den Durchlaßhohlraum (16;70;98; 134) zwischen der Auslaßöffnung (48;96;136) der Verbrennungskammer (18;68;94;128; 149) und der Gasaustrittsöffnung hineinragende Zwischenwände (44;62;142,144) aufweist.

27. Gehäuse nach einem der Ansprüche 24 bis 27, dadurch gekennzeichnet, daß die Halterungsabschnitte als in der Gehäuseaußenwand (28;162) integrierte U-förmige Nuten (40,42) zum seitlichen Umgreifen des mindestens einen Filterelements (36,38;80;104; 138,140) ausgebildet sind.

28. Gehäuse nach Anspruch 26 oder 27, dadurch gekennzeichnet, daß die Halterungsabschnitte an den Zwischenwänden und auf der Innenfläche der Gehäuseaußenwand ausgebildet sind, wobei die Gehäuseaußenwand auf der Innenfläche eine U-förmige erste Nut (40) aufweist und das dieser ersten Nut (40) zugewandte Ende einer Zwischenwand (44) ebenfalls eine U-förmige zweite Nut (42) aufweist, die parallel zur ersten Nut (40) verläuft.

29. Gehäuse nach einem der Ansprüche 24 bis 28, dadurch gekennzeichnet, daß die Halterungsabschnitte (40,42;146) eines Filterelementes (36,38;80;104; 138,140) eine Sollbruchstelle zum Freigeben des Filterelementes (36,48;80;104;138,140) aus dem Halterungsabschnitt (40,42;146) bei Überschreiten eines bestimmten auf das Filterelement (36,38;80; 104;138,140) wirkenden Verbrennungsgasdruckes aufweisen.

30. Gehäuse nach Anspruch 28 oder 29, dadurch gekennzeichnet, daß einer der Seitenwandabschnitte der U-förmigen Nuten (40,42) auf der Innenfläche der Gehäuseaußenwand (28;162) und/oder der Zwischenwand (44;72;142,144) einen Bereich verringerter Wandstärke aufweist.

31. Gehäuse nach einem der Ansprüche 24 bis 30, dadurch gekennzeichnet, daß die Innenfläche der Gehäuseaußenwand in dem Bereich des sich an die Auslaßöffnung (96) der Verbrennungskammer (94) anschließenden Durchlaßhohlraumes (98) mehrere zur Auslaßöffnung (96) hin offene Aufnahmetaschen (100) für von der Verbrennungsgasströmung mittransportierte Partikel und/oder kondensierte Flüssigkeitstropfen aufweist.

32. Gehäuse nach Anspruch 31, dadurch gekennzeichnet, daß die Aufnahmetaschen (100) durch nach innen vorstehende zumindest im Endbereich auf die Auslaßöffnung (94) zu gerichtete in der Gehäusewand integrierte Stege (102) ausgebildet sind.

33. Gehäuse nach einem der Ansprüche 24 bis 32, dadurch gekennzeichnet, daß das Strangpreßprofil mehrere bei der Herstellung des Strangpreßprofils miterzeugte Durchgangsbohrungen (64;112) zur Aufnahme von Befestigungsschrauben (114) zum Befestigen der Deckelelemente (110) an den stirnseitigen Enden des Strangpreßprofils aufweist.

34. Gehäuse nach einem der Ansprüche 24 bis 33, dadurch gekennzeichnet, daß die Verbrennungskammer (128) integraler Bestandteil des Strangpreßhohlprofils ist, wobei die Auslaßöffnung der Verbrennungskammer (128) als sich über die gesamte Strangpreßprofillänge erstreckender Schlitz (136) ausgebildet ist.

35. Gehäuse nach einem der Ansprüche 24 bis 34, dadurch gekennzeichnet, daß an der Außenfläche der Gehäuseaußenwand im Bereich der Verbrennungskammer (68) zwei im Strangpreßprofil integrierte abstehende Haltevorsprünge (82) mit einander zugewandten symmetrischen Ausnehmungen (84) vorgesehen sind und daß über eines der stirnseitigen Enden des Strangpreßprofils in die Ausnehmungen (84) ein sich zwischen diesen erstreckendes Tragelement (86) für die Anzündeinheit (90) einschiebbar ist, wobei sich die Anzündeinheit (90) im eingebauten Zustand durch zwei miteinander fluchtende Öffnungen in der Gehäuseaußenwand und der Verbrennungskammer (68) oder - bei integraler Ausbildung von Gehäusekörper und Verbrennungskammer - durch eine Öffnung in der Gehäuseaußenwand hindurch bis in die Verbrennungskammer (68) hinein erstreckt.

36. Gehäuse nach einem der Ansprüche 24 bis 35, dadurch gekennzeichnet, daß mehrere Gasaustrittsöffnungen (154) in Längserstreckung des Strangpreßprofils angeordnet sind und daß zu beiden Längsseiten der Reihe von Gasaustrittsöffnungen (154) nach außen abstehende im Strangpreßprofil integrierte gekrümmte Randabschnitte (160) angeordnet sind, die eine den Gasaustrittsöffnungen (154) nachgeschaltete Düse (156) bilden.

37. Gehäuse nach Anspruch 36, dadurch gekennzeichnet, daß die die Düse (156) bildenden Randabschnitte (160) der Gehäuseaußenwand (162) einen Schlitz (158) begrenzen und geringfügig ins Gehäuseinnere überstehen und daß ein mit mehreren Löchern versehener Lochstreifen (166) vorgesehen ist, der hochstehende Längsränder (164) mit hakenförmigen Enden zum Umgreifen der nach innen überstehenden Bereiche der Randabschnitte (160) aufweist und über eines der stirnseitigen Enden des Strangpreßprofils aufschiebbar ist.

38. Gehäuse nach Anspruch 36 oder 37, dadurch gekennzeichnet, daß zur Verbesserung des Mitreißens von Umgebungsluft infolge des aus der Düse (156) ausströmenden Verbrennungsgases im Bereich der Düse (156) einstückig mit dem Strangpreßprofil verbundene und im Abstand zu diesen angeordnete Luftleitplatten (168) vorgesehen sind, die sich über die gesamte Länge des Strangpreßprofils erstrecken, wobei im Verbindungsbereich zwischen Strangpreßprofil und Luftleitplatten (168) Durchgangslöcher (170) zum Ansaugen der Umgebungsluft ausgebildet sind.

## Claims

1. Gas generator, in particular for an air bag, having
- a housing (10;66;92;126;148) which is open at two opposing end faces and in its housing wall (28;162) has at least one gas orifice (62;76;108;132;154),
- two cover elements (110) for closing the end faces of the housing (10;66;92;126;148),
- a combustion chamber (18;68;94;128;149), arranged in the housing (10;66;92;126;148) and having at least one outlet orifice (48;96;136), for receiving and burning gas-generating material (20;130) ignitable by means of an ignition unit (24;90;118) and
- at least one filter element (36,38;80;104;138,140), arranged in the housing (10;66;92;126;148) and having several wire mesh mats, for cleaning the combustion-gas flow,
characterized in that
- the housing (10;66;92;126;148) is formed as an extruded hollow profile of aluminium or an aluminium alloy manufactured in the extrusion process and
- the extruded hollow profile has integral holding sections (40,42;146) for the filter element (36,38;80;104;138;140) opposing one another, between which holding sections the filter element (36,38;80;104;138;140) can be inserted by means of one of the open end faces of the extruded hollow profile, with the wire mesh mats extending in a straight line between the holding sections (40,42;146).

2. Gas generator according to claim 1, characterized in that a discharge chamber (16;70;98;134) is formed between the outlet orifice (48;96;136) of the combustion chamber (18;68;94;128;149) and the gas orifice (62;76;108;132;154) for the combustion-gas flow, the holding sections (40,42;146) being arranged in the discharge chamber.

3. Gas generator according to claim 1 or 2, characterized in that the extruded profile of the housing for deflecting the combustion-gas flow has integral intermediate walls (44;62;142,144) projecting into the discharge chamber (16;70;98;134) between the outlet orifice (48;96;136) of the combustion chamber (18;68;94;128;149) and the gas orifice of the housing (10;66;92;126;148).

4. Gas generator according to one of claims 1 to 3, characterized in that holding sections (40,42;146) for several filter elements (36,38;80;104;138,140) are provided, with the clear mesh widths of the wire mesh mats of the filter elements (36,38;80;104;138;140) being different.

5. Gas generator according to claim 4, characterized in that the filter elements (36,38;80;104;138,140) are arranged so that they are staggered and/or rotated relative to one another.

6. Gas generator according to one of claims 1 to 5, characterized in that the holding sections are formed as U-shaped grooves (40,42) integrated in the outer wall (28;162) of the housing for lateral embracing of the at least one filter element (36,38;80;104;138,140).

7. Gas generator according to one of claims 3 to 6, characterized in that the holding sections are formed at the intermediate walls and on the inner surface of the outer wall of the housing, with the outer wall of the housing having a U-shaped first groove (40) on the inner surface and the end of an intermediate wall (44) facing this first groove (40) likewise having a U-shaped second groove (42) which extends in parallel with the first groove (40).

8. Gas generator according to one of claims 1 to 7, characterized in that the holding sections (40,42;146) of a filter element (36,38;80;104;138,140) have a predetermined breaking point for releasing the filter element (36,48;80;104;138,140) from the holding section (40,42;146) upon the exceeding of a certain combustion-gas pressure acting on the filter element (36,38;80;104;138,140).

9. Gas generator according to claim 7 and 8, characterized in that one of the side-wall sections of the U-shaped grooves (40,42) on the inner surface of the outer wall of the housing (28;162) and/or the intermediate wall (44;72;142,144) has a region of reduced wall thickness.

10. Gas generator according to one of claims 3 to 10, characterized in that a separator element (56;78) is arranged in the region of a deflection of the combustion-gas flow, the separator element consisting of several wire mesh mats arranged on top of one another and collecting particles and/or condensed drops of liquid transported along by the combustion-gas flow.

11. Gas generator according to claim 10, characterized in that the separator element (56;78) is arranged so that it abuts the inner surface of the outer wall of the housing (28;172) and is supported by it.

12. Gas generator according to claim 11, characterized in that the inner surface of the outer wall of the housing (28) in the area abutting the separator element (56) is provided with recesses (58) for receiving particles and/or condensed drops of liquid penetrating the separator element (56).

13. Gas generator according to one of claims 1 to 12, characterized in that the inner surface of the outer wall of the housing in the area of the discharge chamber (98) attached to the outlet orifice (96) of the combustion chamber (94) has several receiving pockets (100) open towards the outlet orifice (96) for particles and/or condensed drops of liquid transported along by the combustion-gas flow.

14. Gas generator according to claim 13, characterized in that the receiving pockets (100) are formed by flanges (102) which project inwardly, are directed to the outlet orifice (94) at least in the end region and are integral with the housing wall.

15. Gas generator according to one of claims 1 to 14, characterized in that the extruded profile of the housing (10;66;92;126;148) has several through passages (64;112), also produced in the manufacture of the extruded profile, for receiving fastening screws (114) for fastening the cover elements (110) to the end faces of the extruded profile.

16. Gas generator according to one of claims 1 to 15, characterized in that the combustion chamber (18;68;94;149) is a separate tubular element, whose ends are open and which can be inserted by means of one of the open ends of the housing (10;66;92;126;148) into a receiving through passage (14) formed in the extruded profile, and can be closed by the cover elements (110) or by separate covers (124) at its ends like the open sides of the housing.

17. Gas generator according to one of claims 1 to 15, characterized in that the combustion chamber (128) is an integral component of the extruded hollow profile of the housing (126), with the outlet orifice of the combustion chamber (128) being formed as a slot (136) extending over the entire length of the extruded profile.

18. Gas generator according to one of claims 1 to 17, characterized in that at the outer surface of the outer wall of the housing in the area of the combustion chamber (68) two projecting holding projections (82) integral with the extruded profile, having symmetrical recesses (84) facing each other, are provided and in that by means of one of the end faces of the extruded profile a support element (86) for the ignition unit (90) can be inserted into the recesses (84), the support element extending between them, with the ignition unit (90) in the installed state extending through two openings, which are in alignment with one another, in the outer wall of the housing and the combustion chamber (68) or - with integral construction of housing and combustion chamber - through an opening in the outer wall of the housing into the combustion chamber (68).

19. Gas generator according to one of claims 1 to 17, characterized in that the ignition unit (118) is arranged at one of the end faces of the combustion chamber (94) and is supported by the accompanying cover element (110) of the housing (92).

20. Gas generator according to claim 19, characterized in that the ignition unit (118) has a flame-guiding tube (120) with opening (122) in the tube wall and which is plunged into the gas-developing material.

21. Gas generator according to one of claims 1 to 20, characterized in that several gas orifices (154) are arranged in the longitudinal direction of the extruded profile of the housing (148) and in that at both longitudinal sides of the row of gas orifices (154) there are arranged outwardly projecting curved edge sections (160) integral with the extruded profile, the edge sections forming a nozzle (156) operating after the gas orifices (154).

22. Gas generator according to claim 21, characterized in that the edge sections (160) of the outer wall of the housing (162) forming the nozzle (156) define a slot (158) and project slightly into the inside of the housing and in that a perforated strip (166) provided with several holes is provided, which has turned-up longitudinal edges (164) with hook-shaped ends to embrace the inwardly projecting areas of the edge sections (160) and can be slipped on by means of one of the end faces of the extruded profile.

23. Gas generator according to claim 21 or 22, characterized in that to improve the entraining of ambient air as a consequence of the combustion-gas flowing out of the nozzle (156) in the area of the nozzle (156) air-guiding plates (168) which are connected as one piece to the housing (148) and are arranged at a distance to these are provided, extending over the entire length of the extruded profile of the housing (148), with through openings (170) being formed for drawing in the ambient air in the connection area between housing (148) and air-guiding plates (168).

24. Housing for a gas generator, in particular for an air-bag gas generator, having
- a housing body (10;66;92;126;148) which is open at two opposing ends, and which has at least one gas outlet opening (62;76;108;132;154) in its housing wall (28;162), and a combustion chamber (18;68;94;128;149) for receipt and combustion of gas generating material (20;130) having at least one outlet opening (48;96;136) and arranged in the housing body (10;66;92;126;148),
characterized in that;
- the housing body (10;66;92;126;148) is formed as extruded hollow profile formed of aluminium or an aluminium alloy and produced in the extrusion molding process and
- the extruded hollow profile has integral holding sections (40,42;146) for at least one filter element (36,38;80;104;138,140) opposing one another, between which the at least one filter element (36,38;80;104;138;140) can be inserted via one of the open front surfaces of the extruded hollow profile.

25. Housing according to claim 24, characterized in that a discharge chamber (16;70;98;134) is formed between the outlet orifice (48;96;136) of the combustion chamber (18;68;94;128;149) and the gas orifice (62;76;108;132;154) for the combustion gas flow, the holding sections (40,42;146) being arranged in the discharge chamber.

26. Housing according to claim 25, characterized in that the extruded profile has integrated intermediate walls (44;62;142,144) extending into the outlet chamber (16;70;98;134) between the outlet opening (48;78;96;136) of the combustion chamber (18;68;94;128;149) and the gas outlet opening for deflecting the combustion gas flow.

27. Housing according to one of claims 24 to 27, characterized in that the holding sections are formed as U-shaped grooves (40,42) integrated in the housing outer wall (28;162) for lateral holding of the at least one filter element (36,38;80;104;138,140).

28. Housing according to claim 26 or 27, characterized in that the holding sections are formed on the intermediate walls and on the inner surface of the outer wall of the housing, with the outer wall of the housing having a U-shaped first groove on the inner surface and having the end of the intermediate wall (44) turned towards this first groove likewise having a U-shaped second groove (42) which extends parallel to the first groove (40).

29. Housing according to one of claims 24 to 28, characterized in that the holding sections (40,42;146) of a filter element (36,38;80;104;138,140) have a predetermined breaking point for releasing the filter element (36,48;80;104;138;140) from the holding section (40,42;146) upon the acceding of a certain combustion gas pressure acting on the filter element (36, 38;80;104;138,140).

30. Housing according to claim 28 or 29, characterized in that one of the side wall sections of the U-shaped grooves (40,42) on the inner surface of the outer wall of the housing (28;162) and/or the intermediate wall (44;72;142,144) has a region of reduced wall thickness.

31. Housing according to one of claims 24 to 30, characterized in that the inner surface of the outer wall of the housing in the area of the discharge chamber (98) attached to the outlet orifice (96) of the combustion chamber (94) has several receiving pockets (100) open towards the outlet orifice (96) for particles and/or condensed drops of liquid transported along by the combustion gas glow.

32. Gas generator according to claim 31, characterized in that the receiving pockets (100) are formed by flanges (102) which project inwardly, are directed to the orifice (94) at least in the end region and are integral with the housing wall.

33. Housing according to claims 24 to 32, characterized in that the extruded profile has several through passages (64;112) also produced in the manufacture of the extruded profile, for receiving fastening screws (114) for fastening the cover elements (110) to the end faces of the extruded profile.

34. Housing according to one of claims 24 to 33, characterized in that the combustion chamber (128) is an integral component of the extruded hollow profile, with the outlet orifice of the combustion chamber (128) being formed as a slot (136) extending over the entire length of the extruded profile.

35. Gas generator according to one of claims 24 to 34, characterized in that at the outer surface of the outer wall of the housing in the area of the combustion chamber (68) two projecting holding projections (82) integral with the extruded profile, having symmetrical recesses (84) facing one another, are provided, and in that, by means of one of the end faces of the extruded profile, a support element (86) for the ignition units (90) can be inserted into the recesses (84), the support element extending between them, with the ignition unit (90) in the installed state extending through two openings, which are in alignment with one another, in the outer wall of the housing and the combustion chamber (68) or - with integral construction of housing body and combustion chamber - through an opening in the outer wall of the housing into the combustion chamber (68).

36. Housing according to one of claims 24 to 35, characterized in that several gas orifices (154) are arranged in the longitudinal direction of the extruded profile and in that, at both longitudinal sides of the row of gas orifices (154), there are arranged outwardly projecting curved edge sections (160) integral with the extruded profile, the edge sections forming a nozzle (156) operating after the gas orifices (154).

37. Housing according to claim 36, characterized in that the edge sections (160) of the outer wall of the housing (162) forming the nozzle (156) define a slot (158) and project slightly into the inside of the housing and in that a perforated strip (166) provided with several holes is provided which has turned up longitudinal edges (164) with hook-shaped ends to embrace the inwardly projecting areas of the edge sections (160) and can be slipped on by means of one of the end faces of the extruded profile.

38. Housing according to claim 36 or 37, characterized in that to improve the entraining of ambient air as a consequence of the combustion gas flowing out of nozzle (156) in the area of the nozzle (156), air-guiding plates (168) are provided which are connected as one piece to the extruded profile and arranged at a distance to these, extending over the entire length of the extruded profile, with through openings (170) being formed between extruded profile and air-guiding plates (168) for drawing in the ambient air.

## Revendications

1. Générateur de gaz, notamment pour un sac gonflable, comportant
- un boîtier (10; 66; 92; 126; 148) qui est ouvert à deux extrémités frontales opposées et comporte dans sa paroi (28, 162) de boîtier au moins une ouverture (62; 76; 108; 132; 154) de sortie de gaz,
- deux éléments (110) formant couvercle pour fermer les extrémités frontales du boîtier (10; 66; 92; 126; 148),
- une chambre de combustion (18; 68; 94; 128; 149) qui est disposée à l'intérieur du boîtier (10; 66; 92; 126; 148), comporte au moins un orifice de sortie (48; 96; 136) et est destinée à recevoir et à assurer la combustion d'un matériau générateur de gaz (20; 130) allumé par une unité de mise à feu (24; 90; 118) et
- au moins un élément filtrant (36; 38; 80; 104; 138; 140) qui est disposé à l'intérieur du boîtier (10; 66; 92; 126; 148) et comporte plusieurs mats filtrants à base de fils aux fins d'épurer le flux de gaz de combustion,
caractérisé par le fait
- que le boîtier (10; 66; 92; 126; 148) est agencé sous forme de profilé creux extrudé en aluminium ou en un alliage à base d'aluminium fabriqué par un procédé d'extrusion et
- que le profilé creux extrudé présente des parties de support (40,42; 146) intégrées en vis-à-vis pour l'élément filtrant (36; 38; 80; 104; 138; 140) entre lesquelles ledit élément filtrant (36; 38; 80; 104; 138; 140) peut être inséré par l'une des extrémités frontales ouvertes du profilé creux extrudé, les mats filtrants à base de fils s'étendant de manière rectiligne entre les parties de support (40,42; 146).

2. Générateur de gaz selon la revendication 1, caractérisé par le fait qu'une chambre de passage (16; 70; 98; 134) pour le flux de gaz de combustion est aménagée entre l'orifice de sortie (48; 96; 136) de la chambre de combustion (18; 68; 94; 128; 149) et l'ouverture de sortie de gaz (62; 76; 108; 132; 154), chambre à l'intérieur de laquelle sont disposées les parties de support (40; 42; 146).

3. Générateur de gaz selon la revendication 1 ou 2, caractérisé par le fait que le profilé extrudé formant le boîtier comporte des parois intermédiaires (44;. 52; 142; 144) intégrées pour la déviation du flux de gaz de combustion qui font saillie dans la chambre de passage (16; 70; 98; 134) aménagée entre l'orifice de sortie (48; 96; 136) de la chambre de combustion (18; 68; 94; 128; 149) et l'ouverture de sortie de gaz du boîtier (10; 66; 92; 126; 148).

4. Générateur de gaz selon l'une des revendications 1 à 3, caractérisé par le fait que les parties de support (40; 42; 146) sont prévues pour plusieurs éléments filtrants (36, 38; 80; 104; 138, 140), les ouvertures libres des mailles des mats de fils des éléments filtrants (36,38; 80; 104; 138, 140) étant différentes.

5. Générateur de gaz selon la revendication 4, caractérisé par le fait que les éléments filtrants (36, 38; 80; 104; 138, 140) sont décalés et/ou tournés les uns par rapport aux autres.

6. Générateur de gaz selon l'une des revendications 1 à 5, caractérisé par le fait que les parties de support (40, 42; 146) sont agencées sous forme de rainures (40, 42) en U intégrées dans la paroi (28; 162) extérieure du boîtier qui enserrent latéralement l'élément filtrant (36,38; 80; 104; 138, 140) au nombre d'au moins un.

7. Générateur de gaz selon l'une des revendications 3 à 6, caractérisé par le fait que les parties de support sont agencées dans les parois intermédiaires et sur la face intérieure de la paroi extérieure du boîtier, la paroi extérieure du boîtier comportant sur sa face intérieure une première rainure (40) en U et l'extrémité d'une paroi intermédiaire (44) tournée vers ladite première rainure (40) comportant à son tour une deuxième rainure (42) en U qui s'étend parallèlement à la première (40).

8. Générateur de gaz selon l'une des revendications 1 à 7, caractérisé par le fait que les parties de support (40, 42; 146) d'un élément filtrant (36,38; 80; 104; 138, 140) sont pourvues d'une zone destinée à la rupture aux fins de libérer l'élément filtrant (36, 38; 80; 104; 138, 140) de la partie de support (40,42; 146) lorsque la pression des gaz de combustion appliquée sur l'élément filtrant (36, 38; 80; 104; 138, 140) dépasse une valeur prédéterminée.

9. Générateur de gaz selon les revendications 7 et 8, caractérisé par le fait que l'une des parties de parois latérales des rainures (40,42) en U sur la face intérieure de la paroi (28; 162) extérieure du boîtier et/ou sur la paroi intermédiaire (44; 72; 142; 144) présente une zone d'épaisseur réduite.

10. Générateur de gaz selon l'une des revendications 3 à 9, caractérisé par le fait qu'un élément piégeur (56; 78) formé de plusieurs mats filtrants à base de fils superposés est disposé dans la zone de changement de direction du flux de gaz de combustion, lequel élément piégeur retient les particules et/ou les gouttellettes de liquide condensé entraînées par le flux de gaz de combustion.

11. Générateur de gaz selon la revendication 10, caractérisé par le fait que l'élément piégeur (56; 78) est disposé sur la face intérieure de la paroi (28; 172) extérieure du boîtier et est tenu par celle-ci.

12. Générateur de gaz selon la revendication 11, caractérisé par le fait que la face intérieure de la paroi (28) extérieure du boîtier, dans sa zone en contact avec l'élément piégeur (56) est pourvue de creux destinés à recevoir les particules et/ou les gouttellettes de liquide condensé qui traversent l'élément piégeur (56).

13. Générateur de gaz selon l'une des revendications 1 à 12, caractérisé par le fait que, dans la zone de la chambre de passage (98) qui fait suite à l'orifice de sortie (96) de la chambre de combustion (94), la face intérieure de la paroi extérieure du boîtier présente plusieurs poches réceptrices (100) qui sont ouvertes en direction de l'orifice de sortie (96) et sont destinées à recevoir les particules et/ou les gouttelettes de liquide condensé entraînées par le flux de gaz de combustion.

14. Générateur de gaz selon la revendications 13, caractérisé par le fait que les poches réceptrices (100) sont formées par des nervures (102) intégrées dans la paroi du boîtier qui font saillie vers l'intérieur et dont la partie terminale au moins est tournée vers l'orifice de sortie (94).

15. Générateur de gaz selon l'une des revendications 1 à 14, caractérisé par le fait que le profilé extrudé du boîtier (10; 66; 92; 126; 148) présente plusieurs trous de passage (64; 112) qui sont réalisés au moment de la fabrication du profilé extrudé et sont destinés à recevoir des vis de Fixation (114) pour la fixation des éléments (110) formant couvercle sur les extrémités frontales du profilé extrudé.

16. Générateur de gaz selon l'une des revendications 1 à 15, caractérisé par le fait que la chambre de combustion (18; 68; 94; 149) est un élément tubulaire indépendant dont les extrémités sont ouvertes et qui peut être introduit par l'un des côtés ouverts du boîtier (10; 66 92; 126; 148) dans une ouverture réceptrice (14) ménagée dans le profilé extrudé et qui, au niveau de ses extrémités, peut être fermé de la même manière que les côtés ouverts du boîtier par les éléments (110) formant couvercle ou par des couvercles (124) indépendants.

17. Générateur de gaz selon l'une des revendications 1 à 15, caractérisé par le fait que la chambre de combustion (128) fait partie intégrante du profilé creux extrudé du boîtier (126), l'orifice de sortie de la chambre de combustion (128) étant agencé sous forme de fente (136) qui s'étend sur l'ensemble de la longueur du profilé extrudé.

18. Générateur de gaz selon l'une des revendications 1 à 17, caractérisé par le fait qu'il est prévu sur la surface extérieure de la paroi extérieure du boîtier, dans la région de la chambre de combustion (68) deux saillies (82) de retenue intégrées dans le profilé extrudé pourvu de cavités (84) symétriques tournées l'une vers l'autre et par le fait que, par l'une des extrémités frontales du profilé extrudé, on peut introduire dans les cavités (84) un élément de support (86) de l'unité de mise à feu (90) qui s'étend entre lesdites cavités, l'unité de mise à feu (90) à l'état monté s'étendant jusque dans la chambre de combustion (68) à travers deux ouvertures mutuellement alignées de la paroi extérieure du boîtier et de la chambre de combustion (68) ou - lorsque le boîtier et la chambre de combustion forment un ensemble intégré - à travers une ouverture dans la paroi extérieure du boîtier.

19. Générateur de gaz selon l'une des revendications 1 à 17, caractérisé par le fait que l'unité de mise à feu (118) est disposée à l'une des extrémités frontales de la chambre de combustion (94) et est tenue par l'élément (110) formant couvercle correspondant du boîtier (92)

20. Générateur de gaz selon; la revendication 19, caractérisé par le fait que l'unité de mise à feu (118) présente un tube (120) de guidage de flamme pourvu d'une ouverture (122) dans sa paroi qui pénètre dans le matériau générateur de gaz.

21. Générateur de gaz selon l'une des revendications 1 à 20, caractérisé par le fait que plusieurs ouvertures (154) de sortie de gaz sont disposées dans la direction longitudinale du profilé extrudé du boîtier (148) et par le fait que des parties de bord (160) courbes intégrées dans le profilé creux sont disposées de part et d'autre de la rangée d'ouvertures (154) de sortie de gaz, lesquelles parties de bord font saillie vers l'extérieur et forment une tuyère (156) placée en aval desdites ouvertures (154) de sortie de gaz.

22. Générateur de gaz selon la revendication 21, caractérisé par le fait que les parties de bord (160) de la paroi (162) extérieure du boîtier qui forment la tuyère (156) délimitent une fente (158) et dépassent faiblement à l'intérieur du boîtier et par le fait qu'il est prévu une bande perforée (166) pourvue de plusieurs trous qui présente des bords longitudinaux (164) repliés avec des extrémités en forme de crochets qui s'engagent sur les parties de bord (160) dépassant vers l'intérieur, laquelle bande perforée peut être enfilée par l'une des extrémités frontales du profilé extrudé.

23. Générateur de gaz selon la revendication 21 ou 22, caractérisé par le fait qu'aux fins d'améliorer l'entraînement d'air ambiant par le gaz de combustion qui sort par la tuyère (156), il est prévu dans la région de la tuyère (156) des plaques déflectrices (168) venues d'une pièce avec le boîtier (148) qui sont disposées à distance de celui-ci et s'étendent sur toute la longueur du profilé extrudé du boîtier (148), des trous de passage (170) pour l'aspiration de l'air ambiant étant aménagés dans la zone de liaison entre le boîtier (148) et les plaques déflectrices (168).

24. Boîtier pour un générateur de gaz, notamment pour un générateur de gaz de sac gonflable, comportant
- un corps de boîtier (10; 66; 92; 126; 148) qui est ouvert à deux extrémités frontales opposées et comporte dans sa paroi (28, 162) de boîtier au moins une ouverture (62; 76; 108; 132; 154) de sortie de gaz,
- une chambre de combustion (18; 68; 94; 128; 149) qui est disposée dans le corps de boîtier (10; 66; 92; 126; 148), comporte au moins un orifice de sortie (48; 96; 136) et est destinée à recevoir et à assurer la combustion d'un matériau générateur de gaz (20; 130),
caractérisé par le fait
- que le corps du boîtier (10; 66; 92; 126; 148) est agencé sous forme d'un profilé creux extrudé en aluminium ou en alliage d'aluminium fabriqué par un procédé d'extrusion et
- par le fait que le profilé creux extrudé présente des parties de support (40, 42; 146) intégrées mutuellement en vis-à-vis pour au moins un élément filtrant (36; 38; 80; 104; 138; 140) entre lesquelles ledit élément filtrant (36; 38; 80; 104; 138; 140) au nombre d'au moins un peut être inséré par l'une des extrémités frontales ouvertes du profilé creux extrudé.

25. Boîtier selon la revendication 24, caractérisé par le fait qu'une chambre de passage (16; 70; 98; 134) pour le flux de gaz de combustion est aménagée entre l'orifice de sortie (48; 96; 136) de la chambre de combustion (18; 68; 94; 128; 149) et l'ouverture de sortie de gaz (62; 76; 108; 132; 154), chambre à l'intérieur de laquelle sont disposées les parties de support (40,42; 146).

26. Boîtier selon la revendication 25, caractérisé par le fait que le profilé extrudé comporte des parois intermédiaires (44; 52; 142; 144) intégrées pour la déviation du flux de gaz de combustion qui font saillie dans la chambre de passage (16; 70; 98; 134) aménagée entre l'orifice de sortie (48; 96; 136) de la chambre de combustion (18; 68; 94; 128; 149) et l'ouverture de sortie de gaz.

27. Boîtier selon l'une des revendications 24 à 26, caractérisé par le fait que les parties de support sont agencées sous forme de rainures (40, 42) en U intégrées dans la paroi (28; 162) extérieure du boîtier qui enserrent latéralement l'élément filtrant (36, 38; 80; 104; 138, 140) au nombre d'au moins un.

28. Boîtier de gaz selon l'une des revendications 26 ou 27, caractérisé par le fait que les parties de support sont agencées dans les - parois intermédiaires et sur la face intérieure de la paroi extérieure du boîtier, la paroi extérieure du boîtier comportant sur sa face intérieure une première rainure (40) en U et l'extrémité d'une paroi intermédiaire (44) tournée vers ladite première rainure (40) comportant à son tour une deuxième rainure (42) en U qui s'étend parallèlement à la première (40).

29. Boîtier selon l'une des revendications 24 à 28, caractérisé par le fait que les parties de support (40, 42; 146) d'un élément filtrant (36,38; 80; 104; 138, 140) sont pourvues d'une zone destinée à la rupture aux fins de libérer l'élément filtrant (36, 38; 80; 104; 138, 140) de la partie de fixation (40, 42; 146) lorsque la pression des gaz de combustion appliqué sur l'élément filtrant (36, 38; 80; 104; 138, 140) dépasse une valeur prédéterminée.

30. Boîtier selon les revendications 28 ou 29, caractérisé par le fait que l'une des parties de parois latérales des rainures (40, 42) en U sur la face intérieure de la paroi (28; 162) extérieure du boîtier et/ou sur la paroi intermédiaire (44; 72; 142; 144) présente une zone d'épaisseur réduite.

31. Boîtier selon l'une des revendications 24 à 30, caractérisé par le fait que, dans la zone de la chambre de passage (98) qui fait suite à l'orifice de sortie (96) de la chambre de combustion (94), la face intérieure de la paroi extérieure du boîtier présente plusieurs poches réceptrices (100) qui sont ouvertes en direction de l'orifice de sortie (96) et sont destinées à recevoir les particules et/ou les goullelettes de liquide condensé entraînées par le flux de gaz de combustion.

32. Boîtier selon la revendications 31, caractérisé par le fait que les poches réceptrices (100) sont formées par des nervures (102) intégrées dans la paroi du boîtier qui font saillie vers l'intérieur et dont la partie terminale au moins est tournée vers l'orifice de sortie (94).

33. Boîtier selon l'une des revendications 24 à 32, caractérisé par le fait que le profilé extrudé présente plusieurs trous de passage (64; 112) qui sont réalisés au moment de la fabrication du profilé extrudé et sont destinés à recevoir des vis de fixation (114) pour la fixation des éléments (110) formant couvercle sur les extrémités frontales du profilé extrudé.

34. Boîtier selon l'une des revendications 24 à 33, caractérisé par le fait que la chambre de combustion (128) fait partie intégrante du profilé creux extrudé, l'orifice de sortie de la chambre de combustion (128) étant agencé sous forme de fente (136) qui s'étend sur l'ensemble de la longueur du profilé extrudé.

35. Boîtier selon l'une des revendications 24 à 34, caractérisé par le fait qu'il est prévu sur la surface extérieure de la paroi extérieure du boîtier, dans la région de la chambre de combustion (68) deux saillies (82) de retenue intégrées dans le profilé extrudé avec des cavités (84) symétriques tournées l'une vers l'autre et par le fait que par l'une des extrémités frontales du profité extrudé on peut introduire dans les cavités (84) un élément de support (86) de l'unité de mise à feu (90) qui s'étend entre lesdites cavités, l'unité de mise à feu (90) à l'état monté s'étendant jusque dans la chambre de combustion (68) à travers deux ouvertures mutuellement alignées de la paroi extérieure du boîtier et de la chambre de combustion ou - lorsque le boîtier et la chambre de combustion forment une ensemble intégré - à travers une ouverture dans la paroi extérieure du boîtier.

36. Boîtier selon l'une des revendications 24 à 35, caractérisé par le fait que plusieurs ouvertures (154) de sortie de gaz sont disposées dans la direction longitudinale du profité extrudé (148) et par le fait que des parties de bord (160) courbes intégrées dans le profité creux sont disposées de part et d'autre de la rangée d'orifices (154) de sortie de gaz, lesquels parties de bord font saillie vers l'extérieur et forment une tuyère (156) placée en aval des orifices (154) de sortie de gaz.

37. Boîtier selon la revendication 36, caractérisé par le fait que les parties de bord (160) de la paroi extérieure (162) du boîtier qui forment la tuyère (156) délimitent une fente (158) et dépassent faiblement à l'intérieur du boîtier et par le fait qu'il est prévu une bande perforée (166) Pourvue de plusieurs trous qui présente des bords longitudinaux (164) repliés avec des extrémités en forme de crochet qui s'engagent sur les parties de bord (160) dépassant vers l'intérieur, laquelle bande perforée peut être enfilée par l'une des extrémités frontales du profilé extrudé.

38. Boîtier selon la revendication 36 ou 37, caractérisé par le fait qu'aux fins d'améliorer l'entraînement d'air ambiant par le gaz de combustion qui sort par la tuyère (156), il est prévu dans la région de la tuyère (156) des plaques déflectrices (168) venues d'une pièce avec le boîtier (148) qui sont disposées à distance de celui-ci et s'étendent sur toute la longueur du profilé extrudé du boîtier (148), des trous de passage (170) pour l'aspiration de l'air ambiant étant aménagés dans la zone de liaison entre le boîtier (148) et les plaques déflectrices (168).
